# EUROPÄISCHE PATENTANMELDUNG

(11) **EP 4 071 643 A1**
(43) Veröffentlichungstag der Anmeldung: **12.10.2022**
(21) Anmeldenummer: 22166286.9
(22) Anmeldetag: 01.04.2022
(51) Int. Cl.: G06F 21/62, H04L 9/00

(54) **SYSTEM ZUR NUTZERSEITIG AUTORISIERBAREN VERARBEITUNG UND FREIGABE VON NUTZERATTRIBUTBEZOGENEN DATEN AN EINEN ANFRAGER**

(30) Priorität: 06.04.2021 DE 102021108544
(71) Anmelder: Perfect-iD GmbH, 50668 Köln (DE)
(72) Erfinder: Zilkens, Johannes, 50668 Köln (DE); Paeffgen, Aldo, 50668 Köln (DE); Fiege, Roland, 50668 Köln (DE); Land, Karl-Heinz, 50668 Köln (DE); Land, Moritz, 50668 Köln (DE); Marks, Timo, 50668 Köln (DE)
(74) Vertreter: Hafner & Kohl PartmbB

(57) **Zusammenfassung**

System (1) zur nutzerseitig autorisierbaren Verarbeitung und Freigabe von nutzerattributbezogenen Daten an einen Anfrager (2).

## Beschreibung

Die Erfindung betrifft ein System zur nutzerseitig autorisierbaren Verarbeitung und Freigabe von nutzerattributbezogenen Daten an einen Anfrager.

Entsprechende Systeme zu einer nutzerseitig autorisierbaren Verarbeitung und Freigabe von nutzerattributbezogenen Daten an einen Anfrager sind aus dem Stand der Technik im Zusammenhang mit Prinzipien einer, typischerweise computer-implementierten, Verarbeitung von nutzerbezogenen Daten in verschiedenen Anwendungen dem Grunde nach bekannt.

Bei entsprechenden Systemen stellt sich regelmäßig die Herausforderung der sicheren Verarbeitung, Speicherung und etwaigen Freigabe entsprechender nutzerbezogener Daten an Anfrager, d. h. im Allgemeinen externe Dritte, welche ein Interesse an entsprechenden nutzerbezogenen Daten, etwa zur Ausführung technischer und/oder wirtschaftlicher Prozesse, haben.

Wenngleich diverse technische Prinzipien für eine sichere Verarbeitung, Speicherung und etwaige Freigabe entsprechender nutzerbezogener Daten an Anfrager, wie z. B. Prinzipien der Kryptographie bzw. Verschlüsselung, dem Grunde nach bekannt sind, besteht ein Verbesserungs- bzw. Weiterentwicklungsbedarf entsprechender Systeme im Hinblick auf eine sichere Verarbeitung, Speicherung und etwaige Freigabe entsprechender nutzerbezogener Daten an Anfrager.

Der Erfindung liegt damit die Aufgabe zugrunde, ein verbessertes System zu einer nutzerseitig autorisierbaren Verarbeitung und Freigabe von nutzerattributbezogenen Daten an einen Anfrager anzugeben.

Die Aufgabe wird durch ein System zur nutzerseitig autorisierbaren Verarbeitung und Freigabe von nutzerattributbezogenen Daten an einen Anfrager gemäß Anspruch 1 gelöst. Die abhängigen Ansprüche beinhalten mögliche Ausführungsformen des Systems gemäß Anspruch 1.

Ein erster Aspekt der Erfindung betrifft ein System zu einer nutzerseitig autorisierbaren bzw. freigebbaren Verarbeitung und Freigabe von nutzerattributbezogenen Daten an einen Anfrager. Das im Weiteren kurz als "System" bezeichnete System zu einer nutzerseitig autorisierbaren bzw. freigebbaren Verarbeitung und Freigabe von nutzerattributbezogenen Daten an einen Anfrager ist sonach eingerichtet, eine nutzerseitig autorisierbare bzw. freigebbare und somit nutzerseitig kontrollierbare Verarbeitung und Freigabe von nutzerattributbezogenen Daten an einen Anfrager, d. h. im Allgemeinen an wenigstens einen externen Dritte, welcher ein Interesse an entsprechenden nutzerbezogenen Daten, etwa zur Ausführung technischer und/oder wirtschaftlicher und/oder medizinischer Prozesse, hat, zu implementieren.

Das typischerweise computer-implementierte System beinhaltet mehrere hardware- und/oder softwaremäßig implementierbare bzw. implementierte Funktionseinheiten, deren Aufgabe, Funktion und Zusammenwirken im Zusammenhang mit dem Betrieb des Systems nachfolgend im Einzelnen erläutert werden.

Das System umfasst zunächst eine hardware- und/oder softwaremäßig implementierte Datenverarbeitungseinrichtung. Die Datenverarbeitungseinrichtung umfasst in an sich üblicherweise wenigstens eine Prozessoreinrichtung, wenigstens eine Datenspeichereinrichtung sowie wenigstens eine Kommunikationsschnittstelle zur Ausgabe und/oder Eingabe von Daten an einen Nutzer und/oder Abfrager.

Die Datenverarbeitungseinrichtung kann einen Bestandteil einer durch das System implementierbaren bzw. implementierten Kommunikationsstruktur, d. h. insbesondere einer Netzwerkarchitektur, weiter insbesondere einer Client-Server-Architektur, bilden. In einer entsprechenden Client-Server-Architektur stellt die Datenverarbeitungseinrichtung typischerweise den Server dar, mit welchem ein oder mehrere Clients, d. h. typischerweise Endgeräte von Nutzern und/oder Abfragern, datenverarbeitungsmäßig über ein oder mehrere Kommunikationsschnittstellen kommunizieren können.

Die Datenverarbeitungseinrichtung kann demnach z. B. als Server, d. h. insbesondere als Cloud-Server, ausgebildet bzw. konfiguriert sein oder einen solchen umfassen.

Die Datenverarbeitungseinrichtung ist hardware- und/oder softwaremäßig zur Erzeugung und/oder Bereitstellung von, insbesondere nutzerdialogartig implementierten, Abfragekriterien zu bestimmten Attributen einer oder mehrerer Attributskategorien wenigstens eines Nutzers über eine erste Kommunikationsschnittstelle, insbesondere an ein nutzerseitiges Endgerät, eingerichtet. Die Datenverarbeitungseinrichtung kann zur Erzeugung und/oder Bereitstellung entsprechender Abfragekriterien zu bestimmten Attributen einer oder mehrerer Attributskategorien wenigstens eines Nutzers eine hardware- und/oder softwaremäßig implementierte Einrichtung zur Erzeugung und/oder Bereitstellung entsprechender Abfragekriterien umfassen.

Zur Bereitstellung entsprechender Abfragekriterien an ein nutzerseitiges Endgerät, wie z. B. ein Handy, Smartphone, Smartwatch, Smartglass, Tablet, Laptop, Desktop, etc., umfasst die Datenverarbeitungseinrichtung wenigstens eine erste Kommunikationsschnittstelle, über welche die über die Datenverarbeitungseinrichtung erzeugten und/oder bereitgestellten Abfragekriterien an ein nutzerseitiges Endgerät bereitgestellt werden können.

Die erste Kommunikationsschnittstelle ist insbesondere eingerichtet, eine drahtgebundene oder drahtlose Kommunikationsverbindung mit einem nutzerseitigen Endgerät aufzubauen bzw. aufrechtzuerhalten. Im Zusammenhang mit dem Aufbau bzw. der Aufrechterhaltung drahtloser Kommunikationsverbindungen kann die erste Kommunikationsschnittstelle z. B. eingerichtet sein, über einen Standard für drahtlose bzw. mobile Kommunikation, insbesondere 4G oder 5G, oder über einen Internet-Standard, insbesondere TCP/IP, mit einem nutzerseitigen Endgerät zu kommunizieren. Standards für mobile Kommunikation können so genannte Mobilfunkstandards der dritten Generation, mithin LTE-Standards, oder Erweiterungen hierzu, wie etwa LTE-Advanced bzw. 4G, sein.

Entsprechende Abfragekriterien können im Rahmen einer über die erste Kommunikationsschnittstelle implementierbaren, insbesondere interaktiven, Kommunikation an ein nutzerseitiges Endgerät (Client) bereitgestellt bzw. übermittelt werden. Die erste Kommunikationsschnittstelle kann dabei eine z. B. über eine Webseite, Softwareanwendung (App), etc. implementierte Nutzeroberfläche umfassen, über welche sich entsprechende Abfragekriterien kommunizieren und/oder nutzerseitige Angaben zu entsprechenden Abfragekriterien tätigen lassen. Alternativ oder ergänzend können entsprechende Abfragekriterien z. B. per SMS, Push-message, Email, etc. an ein nutzerseitiges Endgerät übertragen werden, sodass entsprechende Abfragekriterien z. B. in Form einer Nachrichtenkette, d. h. insbesondere eines Chats, übertragen werden können.

Eine entsprechende Kommunikation kann, wie erwähnt, z. B. implementiert über eine Softwareanwendung (App), insbesondere (nutzer)dialogartig, d. h. im einfachsten Fall nach dem Prinzip Frage-Antwort, Folgefrage-Folgeantwort, etc., implementiert sein bzw. werden; mithin kann die Datenverarbeitungseinrichtung eingerichtet sein, wenigstens einem Nutzer - ähnlich bzw. analog einem Gespräch zwischen Menschen - auf Grundlage entsprechender Abfragekriterien Fragen stellen, um von dem wenigstens einen Nutzer in Form von nutzerseitigen Eingaben Angaben zu bestimmten Attributen bestimmter Attributskategorien zu erhalten. Konkret kann ein Nutzer über eine Ausgabeschnittstelle, wie z. B. über eine Audio- und/oder Videoschnittstelle, eines nutzerseitigen Endgeräts beispielsweise nach bestimmten Informationen, wie z. B. seinem Namen, Alter, Geschlecht, Wohnort, etc., gefragt werden und sodann über entsprechende Eingaben an seinem nutzerseitigen Endgerät Angaben zu Abfragekriterien tätigen, welche seitens der Datenverarbeitungseinrichtung, z. B. über die Implementierung weiter unten erwähnter Elemente künstlicher Intelligenz, bestimmten Attributen bzw. Attributskategorien zuordenbar sind. Selbstverständlich können parallel oder seriell mehrere Nutzer in entsprechender Weise nach bestimmten nach bestimmten Informationen gefragt und von mehreren Nutzern in entsprechender Weise parallel oder seriell Angaben zu Abfragekriterien getätigt werden.

Die Datenverarbeitungseinrichtung kann sonach wenigstens ein künstliches neuronales Netz umfassen, welches zur Erzeugung und/oder Bereitstellung von, insbesondere nutzerdialogartig implementierten, Abfragekriterien zu bestimmten Attributen einer oder mehrerer Attributskategorien eines Nutzers eingerichtet ist. Insbesondere kann die Datenverarbeitungseinrichtung ein künstliches neuronales Netz umfassen, welches auf Grundlage wenigstens einer über die erste Kommunikationsschnittstelle getätigten nutzerseitigen Angabe zu wenigstens einem abfragekriteriumsbezogenen Attribut zur Erzeugung von wenigstens einem die wenigstens eine nutzerseitige Angabe beinhaltenden Attributsdatensatz in der der Datenverarbeitungseinrichtung zugeordneten, insbesondere Cloud-basierten, Datenspeichereinrichtung eingerichtet ist,

Die Erzeugung und/oder Bereitstellung entsprechender Abfragekriterien kann sonach unter Verwendung von Elementen künstlicher Intelligenz, d. h. insbesondere künstlicher neuronaler Netze, gegebenenfalls nutzerspezifisch anpassbar, implementiert werden. Mithin kann die Datenverarbeitungseinrichtung insbesondere Elemente künstlicher Intelligenz, d. h. insbesondere künstliche neuronale Netze, umfassen, welche eingerichtet sind, insbesondere unter Berücksichtigung einer oder mehrerer, gegebenenfalls nutzerbezogener Eingangsparameter, Abfragekriterien zu erzeugen und/oder bereitzustellen. Entsprechende Abfragekriterien können sonach z. B. auf Grundlage nutzerbezogener Eingangsparameter nutzerspezifisch erstellt und im Rahmen einer entsprechenden Interaktion mit einem Nutzer, gegebenenfalls in Echt-Zeit, angepasst bzw. variiert werden. Beispielsweise ist es denkbar, dass bei Erkennung einer, gegebenenfalls unerwarteten, zeitlichen Verzögerung einer nutzerseitigen Eingabe zu bestimmten Abfragekriterien entschieden wird, einem Nutzer nicht mit anderen Abfragekriterien zu konfrontieren, etwa weil die zeitliche Verzögerung einen Hinweis darauf geben kann, dass ein Nutzer Angaben zu dem Abfragekriterium nicht tätigen möchte. An dieser Stelle ist jedoch allgemein zu bemerken, dass ein Nutzer selbstverständlich die Möglichkeit hat, Angaben zu einzelnen oder mehreren Abfragekriterien aufzuschieben bzw. zu verweigern.

Die Datenverarbeitungseinrichtung ist auf Grundlage wenigstens einer über die erste Kommunikationsschnittstelle getätigten nutzerseitigen Angabe zu wenigstens einem abfragekriteriumsbezogenen Attribut zur Erzeugung wenigstens eines die wenigstens eine nutzerseitige Angabe beinhaltenden nutzerbezogenen Attributsdatensatzes, z. B. in Form eines Nutzerprofils, und zur Speicherung des wenigstens einen nutzerbezogenen Attributsdatensatzes in einer der Datenverarbeitungseinrichtung zugeordneten, insbesondere Cloud-basierten, Datenspeichereinrichtung eingerichtet. Die Datenverarbeitungseinrichtung ist sonach eingerichtet, entsprechende über die erste Kommunikationsschnittstelle getätigte nutzerseitige Angabe zu wenigstens einem abfragekriteriumsbezogenen Attribut zu verarbeiten, wobei die Verarbeitung ein Erzeugen nutzerbezogener Attributsdatensätze beinhaltet. Die Datenverarbeitungseinrichtung kann zur Erzeugung wenigstens eines die wenigstens eine nutzerseitige Angabe beinhaltenden nutzerbezogenen Attributsdatensatzes eine hardware- und/oder softwaremäßig implementierte Einrichtung zur Erzeugung wenigstens eines die wenigstens eine nutzerseitige Angabe beinhaltenden nutzerbezogenen Attributsdatensatzes umfassen.

Die Verarbeitung entsprechender über die erste Kommunikationsschnittstelle getätigter nutzerseitiger Angaben zu entsprechenden nutzerbezogenen Attributsdatensätzen kann eine datenverarbeitungsmäßig implementierte Analyse bzw. Auswertung der jeweiligen nutzerseitigen Angaben nach bestimmten Attributen bzw. Attributskategorien beinhalten. Die Datenverarbeitungseinrichtung kann sonach geeignete Analyse- bzw. Auswertealgorithmen umfassen, welche eingerichtet sind, über die erste Kommunikationsschnittstelle getätigte nutzerseitige Angaben zu wenigstens einem abfragekriteriumsbezogenen Attribut nach bestimmten Analyse- bzw. Auswertekriterien zu prüfen, um in den nutzerseitigen Angaben bestimmte Attribute bzw. Attributskategorien zu erkennen. Derart können in einer nutzerseitigen Angabe gegebenenfalls sogar "versteckte" Attribute erkannt werden. Beispielsweise kann durch eine besonders gewählte sprachliche Ausdrucksweise zu einem bestimmten Abfragekriterium auf ein gewisses Bildungsniveau oder eine gewisse Ausbildung eines Nutzers geschlossen werden können. Konkret kann die Verwendung spezieller Fachbegriffe z. B. auf eine Ausbildung eines Nutzers in einem bestimmten Fachbereich, wie z. B. Wissenschaft und Technik, geschlossen werden. Eine solche Ausbildung in einem bestimmten Fachbereich kann im Übrigen ein Beispiel für ein Attribut bzw. eine Attributskategorie sein. Entsprechende Analyse- bzw. Auswertealgorithmen können zudem, z. B. in Form oder als Bestandteil von Audio- und/oder Videoverarbeitungsalgorithmen, eingerichtet sein, bestimmte akustische und/oder optische Merkmale in den z. B. als Audio- und/oder Videodaten vorliegenden nutzerseitigen Eingaben aufzufinden, um in den nutzerseitig getätigten Angaben Attribute bzw. Attributskategorien effizient zu erkennen. In analoger Weise können Bewegungen in Videodaten verarbeitet werden, um Attribute bzw. Attributskategorien zu erkennen. In analoger Weise können auch Prinzipien der Objekterkennung angewandt werden.

An dieser Stelle ist allgemein zu bemerken, dass nutzerseitige Angaben im Allgemeinen auch die, z. B. über einen Upload erfolgende, bewusste nutzerseitige Bereitstellung von Informationen bzw. Informationsstrukturen, z. B. in Form von Datensätzen bzw. Dokumenten, beinhalten kann. Mithin kann ein Nutzer der Datenverarbeitungseinrichtung gezielt Dokumente, wie z. B. Urkunden, Verträge, Lebensläufe, Rechnungen, etc., zumindest auszugsweise bereitstellen, welche seitens der Datenverarbeitungseinrichtung im Hinblick auf bestimmte Attribute bzw. Attributskategorien analysiert bzw. ausgewertet werden.

Konkret kann ein Nutzer z. B. Urkunden, wie z. B. seinen Personalausweis, sein Ausbildungsabschlusszeugnis, etc., oder vertragliche Dokumente, wie z. B. Kauf-, Leasing- oder sonstige Verträge über Dienstleistungen und/oder Waren, wie z. B. Audio- und/oder Videoinhaltbereitstellungsverträge, Fahrzeugverträge, Finanzdienstleistungsverträge, Mobilfunkverträge, Energielieferungsverträge, Versicherungsverträge, Behandlungsverträge, etc., bereitstellen, welche seitens der Datenverarbeitungseinrichtung, z. B. unter Verwendung von Prinzipien der Muster- und/oder Texterkennung, im Hinblick im Hinblick auf bestimmte Attribute bzw. Attributskategorien analysiert bzw. ausgewertet werden. Aus einer entsprechenden Analyse bzw. Auswertung kann sich als Attribut z. B. ergeben, dass ein Nutzer zu einer bestimmten ein Abschluss eines neuen Vertrags angeboten werden könnte, weil ein bestehender Vertrag ausläuft. Aus einer entsprechenden Analyse bzw. Auswertung können sich als Attribute sonach allgemein Vertragsbedingungen bzw. -konditionen ableiten lassen. Aus einer entsprechenden Analyse bzw. Auswertung können sich jedoch weitergehende Attribute ableiten lassen; beispielsweise kann erkannt werden, dass ein Nutzer bei Energielieferverträgen langfristige Verträge mit Energielieferanten, welche regenerative Energien liefern, schließt oder kurzfristige Verträge mit Energielieferanten unabhängig davon, ob diese regenerative Energien liefern oder nicht, schließt. Ebenso ist es denkbar, dass durch entsprechende Analyse bzw. Auswertung nutzerseitig getätigter Angaben erkannt werden kann, dass ein Nutzer bestimmte Verträge in Zukunft mit bestehenden oder neuen Anbietern von allen Arten von Dienstleistungen und/oder Waren abschließen möchte oder in Zukunft mit bestehenden oder neuen Anbietern von Dienstleistungen und/oder Waren nicht mehr abschließen möchte. Selbstverständlich kann ein Nutzer solche Angaben auch explizit tätigen.

Sämtliche Analyse- bzw. Auswertealgorithmen der Datenverarbeitungseinrichtung können über Mittel der künstlichen Intelligenz, d. h. insbesondere ein- oder mehrschichtige künstliche neuronale Netze, implementiert sein bzw. werden, welchen in einer Eingabeschicht als Eingangsinformationen entsprechende nutzerseitige Angaben zugeführt werden, die über eine oder mehrere Neuronen bzw. -Zwischenschichten verarbeitet und in einer Ausgabeschicht als bestimmte Attribute bzw. Attributskategorien ausgegeben werden. Entsprechende künstliche neuronale Netze können im Rahmen von Maßnahmen des maschinellen Lernens, z. B. mit Referenzdaten, trainiert worden sein, um eine präzise(re) Zuordnung nutzerseitiger Angaben bzw. darin enthaltener Informationen zu bestimmten Attributen bzw. Attributskategorien zu erreichen.

Die durch Verarbeitung entsprechender nutzerseitiger Angaben erhaltenen nutzerbezogenen Attribute bzw. Attributskategorien können als nutzerbezogene Attributsdatensätze bzw. -sammlungen über die Datenverarbeitungseinrichtung in einer dieser zugeordneten, gegebenenfalls Cloud-basierten, Datenspeichereinrichtung gespeichert sein bzw. werden. Die Datenspeichereinrichtung kann eingerichtet sein, im Rahmen der Speicherung der Attribute bzw. Attributskategorien eine geeignete Ordnerstruktur zu implementieren. Eine entsprechende Ordnerstruktur kann sowohl eine nutzerbezogene als auch eine übergeordnete Ordnung gespeicherter Attribute bzw. Attributskategorien implementieren, sodass z. B. Abfragen nach bestimmten Attributen zu einem bestimmten Nutzer aber auch allgemeine Abfragen nach Nutzern mit bestimmten Attributen getätigt werden können. Die Implementierung einer entsprechenden Ordnerstruktur kann eine vereinfachte rechnerbasierte Auffindbarkeit und gegebenenfalls Weiterverarbeitbarkeit der in der Datenspeichereinrichtung gespeicherten Daten ermöglichen.

Aus vorstehenden Erläuterungen ergibt sich, dass über die Datenverarbeitungseinrichtung diverse nutzerbezogene Informationen gesammelt werden können, welche für Anfrager, d. h. im Allgemeinen für externe Dritte und im Besonderen für Anbieter von Dienstleistungen und/oder Waren, von besonderem Interesse sein können, sodass hier ein besonderes technisches Schutzbedürfnis dahin besteht, dass diese Daten nicht unautorisiert, d. h. insbesondere nicht ohne Einverständnis des jeweiligen Nutzers, an entsprechende Dritte weitergebbar sind. Der im Weiteren verwendete Begriff "Anfrager" (Requester) kann sich auf entsprechende externe Dritte bzw. Anbieter von Dienstleistungen und/oder Waren beziehen.

Um dieser bereits eingangs erwähnten Herausforderung einer sicheren Verarbeitung, Speicherung und etwaigen Freigabe entsprechender nutzerbezogener Daten an Anfrager gerecht zu werden, umfasst das System eine hardware- und/oder softwaremäßig implementierte Autorisierungseinrichtung, welche zur Autorisierung einer über eine zweite Kommunikationsschnittstelle (hierbei kann es sich grundsätzlich um die gleiche Kommunikationsschnittstelle wie die erste Kommunikationsschnittstelle handeln) erfolgenden Anfrage eines Anfragers an die Datenspeichereinrichtung nach bestimmten Attributsdatensätzen, insbesondere nach bestimmten Attributen wenigstens eines Nutzers, auf Grundlage des Vorliegens wenigstens eines Autorisierungskriteriums eingerichtet ist. Die Autorisierungseinrichtung ist sonach eingerichtet, eine Anfrage eines Anfragers an die Datenspeichereinrichtung nach bestimmten Attributsdatensätzen, insbesondere nach bestimmten Attributen wenigstens eines Nutzers, nur bei Vorliegen wenigstens eines Autorisierungskriteriums zu autorisieren, sodass ein Anfrager nur bei Vorliegen wenigstens eines Autorisierungskriteriums die Möglichkeit hat, überhaupt entsprechende Anfragen an die Datenspeichereinrichtung zu stellen. Über die Autorisierungseinrichtung ist sonach eine sehr frühzeitig und damit sehr effizient wirkende technische Hürde implementiert, welche einen unautorisierten Zugriff auf die Datenspeichereinrichtung respektive in der Datenspeichereinrichtung gespeicherte Attributsdatensätze ohne Vorliegen wenigstens eines Autorisierungskriteriums nicht möglich macht. Ein entsprechender Zugriff auf die Datenspeichereinrichtung respektive in der Datenspeichereinrichtung gespeicherte Attributsdatensätzen kann, wie erwähnt, nur bei Vorliegen wenigstens eines Autorisierungskriteriums erfolgen.

Ein entsprechendes Autorisierungskriterium kann z. B. ein Vorliegen eines anfragerseitig erfolgten, insbesondere an den Betreiber des Systems gerichteten, Bezahlereignisses für die Anfragemöglichkeit nach bestimmten in der Datenspeichereinrichtung gespeicherten Attributsdatensätzen beschreiben. Selbstverständlich ist alternativ oder ergänzend die Implementierung anderer Autorisierungskriterien, wie z. B. eines Autorisieriungskriteriums in Form einer Prüfung eines anfragerseitigen Endgeräts im Hinblick auf technische Kompatibilität mit dem System, denkbar.

Die Autorisierungseinrichtung wirkt sonach mit der Datenverarbeitungseinrichtung derart zusammen, dass die Datenverarbeitungseinrichtung eingerichtet ist, (nur) bei Vorliegen des wenigstens einen Autorisierungskriteriums - dieses kann über die Autorisierungseinrichtung gegebenenfalls im Hinblick auf ein oder mehrere Gültigkeitskriterien geprüft werden - Attributsdatensätze zu ermitteln, welche einer Anfrage des Anfragers entsprechen. Die Autorisierungseinrichtung kann sonach als eine die Datenverarbeitungseinrichtung und die Datenspeichereinrichtung umgebende Datensicherheitsstruktur verstanden werden, welche die durch die Datenverarbeitungseinrichtung erzeugte und in der Datenspeichereinrichtung gespeicherten nutzerbezogenen Daten in Form entsprechender Attribute bzw. Attributskategorien nur unter bestimmten Bedingungen freizugeben.

Wie sich im Weiteren ergibt, kann das Vorliegen eines entsprechenden Autorisierungskriteriums zusätzlich mit dem Vorliegen eines gesonderten nutzerseitigen Freigabekriteriums verknüpft sein, sodass ein "Zugriff" auf in der Datenspeichereinrichtung gespeicherte nutzerbezogene Daten durch einen Anfrager nur bei Vorliegen des Autorisierungskriteriums als auch des Vorliegens eines gesonderten nutzerseitigen Freigabekriteriums möglich ist.

Die eine Kommunikation mit einem Endgerät eines Anfragers ermöglichende zweite Kommunikationsschnittstelle kann analog der ersten Kommunikationsschnittstelle konfiguriert sein; mithin ist auch die zweite Kommunikationsschnittstelle insbesondere eingerichtet, eine drahtgebundene oder drahtlose Kommunikationsverbindung mit einem anfragerseitigen Endgerät, wie z. B. einem Handy, Smartphone, Smartwatch, Smartglass, Tablet, Laptop-Computer, Desktop-Computer, etc., aufzubauen bzw. aufrechtzuerhalten. Im Zusammenhang mit dem Aufbau bzw. der Aufrechterhaltung drahtloser Kommunikationsverbindungen kann die zweite Kommunikationsschnittstelle z. B. eingerichtet sein, über einen Standard für drahtlose bzw. mobile Kommunikation, insbesondere 4G oder 5G, oder über einen Internet-Standard, insbesondere TCP/IP, mit einem nutzerseitigen Endgerät zu kommunizieren. Standards für mobile Kommunikation können so genannte Mobilfunkstandards der dritten Generation, mithin LTE-Standards, oder Erweiterungen hierzu, wie etwa LTE-Advanced bzw. 4G, sein.

Die zweite Kommunikationsschnittstelle kann analog der ersten Kommunikationsschnittstelle eine z. B. über eine Webseite, Softwareanwendung (App), etc. implementierte Nutzeroberfläche umfassen, über welche sich (bei Vorliegen eines entsprechenden Autorisierungskriteriums, anfragerseitige Angaben zu nutzerbezogenen Daten, d. h. insbesondere nutzerbezogenen Attributen bzw. Attributskategorien, tätigen lassen.

Insgesamt liegt ein verbessertes System zur nutzerseitig autorisierbaren Verarbeitung und Freigabe von nutzerattributbezogenen Daten an einen Anfrager vor.

In einer Ausführungsform kann die Datenverarbeitungseinrichtung eingerichtet sein, entsprechende Abfragekriterien auf Grundlage von, insbesondere über das Internet, (frei) zugänglichen Informationen zu einem jeweiligen Nutzer zu erzeugen. Die Datenverarbeitungseinrichtung kann sonach eingerichtet sein, auf Grundlage von zugänglichen Informationen zu einem jeweiligen Nutzer nutzerspezifische Abfragekriterien zu erzeugen, was die Effizienz der Erzeugung entsprechender Attributsdatensätze, z. B. aufgrund eines reduzierten Rechenaufwands, steigern kann, als die Datenverarbeitungseinrichtung bereits über gewisse Basisinformation zu einem Nutzer verfügen kann, sodass diesbezügliche Abfragekriterien z. B. vermieden werden können, als die durch die Abfragekriterien zu erzeugenden Attribute über anderweitige Informationsquellen verfügbar sind. Selbstverständlich kann die Datenverarbeitungseinrichtung auch eingerichtet sein, entsprechende zugänglichen Informationen zu einem jeweiligen Nutzer im Rahmen nutzerdialogartig implementierter Abfragekriterien zu verwenden. Die Datenverarbeitungseinrichtung kann einem Nutzer im Rahmen eines entsprechenden Dialogs z. B. fragen, ob er noch in der Abteilung X bei dem Unternahmen Y beschäftigt ist, wie es z. B. auf einer Internet-Webseite bzw. Internetplattform beschrieben ist.

In einer weiteren Ausführungsform kann die Datenverarbeitungseinrichtung eingerichtet sein, Abfragekriterien nutzerdialogartig implementiert nach einer vordefinierten Abfragereihenfolge bzw. -logik geordnet abzufragen. Die Implementierung einer entsprechenden Abfragereihenfolge bzw. -logik kann die Erzeugung entsprechender Attributsdatensätze, insbesondere aufgrund eines reduzierten Rechenaufwands, effizienter gestalten, als die nutzerseitigen Angaben typischerweise in einer gewissen logischen Beziehung, z. B. bedingt durch eine gewisse thematische Nähe, stehen, was die rechnerbasierte Zuordnung der nutzerseitigen Angaben zu Attributen bzw. Attributskategorien vereinfachen kann.

In einer weiteren Ausführungsform kann die Datenverarbeitungseinrichtung eingerichtet sein, Abfragekriterien nutzerdialogartig implementiert, gegebenenfalls über eine z. B. als App implementierte, virtuelle Dialogassistenzanwendung, über einen Audio- und/oder Videodialog abzufragen. Derart kann eine effiziente und praktikable Erfassung nutzerattributbezogener Daten erfolgen.

In einer weiteren Ausführungsform kann die Datenverarbeitungseinrichtung bei Vorliegen des wenigstens einen Autorisierungskriteriums zur Ausgabe von einer Anfrage des Anfragers entsprechenden Attributsdatensätzen an ein Endgerät des Anfragers über die zweite Kommunikationsschnittstelle eingerichtet sein. Das durch die Autorisierungseinrichtung ermittelbare bzw. ermittelte Vorliegen des wenigstens eines Autorisierungskriteriums kann sonach Bedingung dafür sein, dass an ein Endgerät des Anfragers Attributsdatensätze, welche einer Anfrage des Anfragers entsprechen, ausgebbar sind. Dies stellt eine weitere Sicherheitsmaßnahme gegen ein unautorisiertes Frei- bzw. Weitergeben nutzerattributbezogener Daten dar, als ohne Vorliegen des Autorisierungskriteriums eine Ausgabe entsprechender Attributsdatensätze nicht möglich ist.

In einer weiteren Ausführungsformen kann die Datenverarbeitungseinrichtung bei Vorliegen des wenigstens einen Autorisierungskriteriums zur Ausgabe von einer Anfrage des Anfragers entsprechenden Attributsdatensätzen an ein Endgerät des Anfragers über die zweite Kommunikationsschnittstelle eingerichtet sein, wobei die Attributsdatensätze zunächst anonymisiert ausgegeben sind. Dies stellt eine weitere Sicherheitsmaßnahme gegen ein unautorisiertes Frei- bzw. Weitergeben nutzerattributbezogener Daten dar, als die Attributsdatensätze zunächst anonymisiert ausgegeben, sodass einem Anfrager keine Zuordnung entsprechender Attributsdatensätze zu bestimmten Nutzern möglich ist. Der Anfrager erhält sonach zunächst nur eine Information darüber, dass seiner Anfrage entsprechende Attributsdatensätze in der Datenspeichereinrichtung vorhanden sind.

In einer weiteren Ausführungsform kann die Datenverarbeitungseinrichtung eingerichtet sein, eine über die zweite Kommunikationsschnittstelle anfragerseitig erhaltene Auswahl wenigstens eines an den Anfrager ausgegebenen Attributsdatensatzes zu verarbeiten. Mithin kann die Datenverarbeitungseinrichtung eingerichtet sein, ein oder mehrere Attributsdatensätze aus einer anfragerseitigen Auswahl aus an diesen - bei entsprechender Autorisierung - ausgegebenen Attributsdatensätzen in besonderer Weise zu verarbeiten. Wie sich im Weiteren ergibt, kann die besondere Verarbeitung entsprechender anfragerseitig ausgewählter Attributsdatensätze eine weitere Sicherheitsstufe gegen ein unautorisiertes Frei- bzw. Weitergeben nutzerattributbezogener Daten durch Implementierung der Möglichkeit einer bewussten nutzerseitigen Freigabe darstellen, indem die Frei- bzw. Weitergeben nutzerattributbezogener Daten eine bewusste nutzerseitige Freigabe erfordert. Diese Konfiguration des Systems ermöglicht sonach eine gezielte Einbeziehung jeweiliger Nutzer in die Autorisierung bzw. Freigabe nutzerbezogener Daten an einen Anfrager, sodass eine nutzerseitig autorisierbare Verarbeitung und Freigabe von nutzerattributbezogener Daten möglich ist.

In einer weiteren Ausführungsform kann die Datenverarbeitungseinrichtung eingerichtet sein, basierend auf einer über die zweite Kommunikationsschnittstelle anfragerseitig erhaltenen Auswahl wenigstens eines an den Anfrager ausgegebenen Attributsdatensatzes über die erste Kommunikationsschnittstelle eine Freigabeberechtigungsanfrage, ob der jeweilige Nutzer eine Freigabe von wenigstens einem Attribut aus seinem Attributsdatensatz über die zweite Kommunikationsschnittstelle an den Anfrager berechtigt, an ein Endgerät des einem anfragerseitig ausgewählten Attributsdatensatzes zugehörigen Nutzers zu erzeugen und zu übertragen. Mithin kann die Datenverarbeitungseinrichtung in Fällen, in welchen eine anfragerseitig erhaltene Auswahl wenigstens eines an den Anfrager ausgegebenen Attributsdatensatzes gegeben ist, eingerichtet sein, eine Freigabeberechtigungsanfrage zu erzeugen, ob der jeweilige Nutzer eine Freigabe von wenigstens einem Attribut aus seinem Attributsdatensatz über die zweite Kommunikationsschnittstelle an den Anfrager berechtigt, und eine solche Freigabeberechtigungsanfrage über die erste Kommunikationsschnittstelle an das Endgerät des jeweiligen Nutzers zu übertragen. Derart ist eine weitere Sicherheitsstufe gegen ein unautorisiertes Frei- bzw. Weitergeben nutzerattributbezogener Daten auf Grundlage einer bewussten nutzerseitigen Freigabe implementiert. Diese Konfiguration des Systems implementiert sonach eine gezielte Einbeziehung jeweiliger Nutzer in die Autorisierung bzw. Freigabe nutzerbezogener Daten an einen Anfrager.

In einer weiteren Ausführungsform kann die Datenverarbeitungseinrichtung eingerichtet sein, über die zweite Kommunikationsschnittstelle wenigstens ein nutzerseitig freigegebenes Attribut an ein Endgerät des Anfragers zu übertragen. Die Übertragung des jeweiligen Attributs an das Endgerät des Anfragers erfolgt sonach nur dann, wenn hierzu eine gesonderte Freigabe des jeweiligen Nutzers vorliegt. Eine entsprechende Übertragung kann in Form einer, gegebenenfalls verschlüsselten, Attributsinformation erfolgen, welche das oder die jeweiligen Attribute beschreibt. Die Verschlüsselung der Attributsinformation kann eine bestimmte sachliche und/oder örtliche und/oder zeitliche Nutzung der Attributsinformation beinhalten. Mithin können entsprechende Attributsinformationen, z. B. durch geeignete Verschlüsselungsmaßnahmen, nur unter beststimmten örtlichen und/oder zeitlichen und/oder sachlichen Bedingungen genutzt werden. Dies betrifft z. B. auch die, sonach gegebenenfalls beschränkbare bzw. beschränkte, Möglichkeit der Anzahl der Nutzung und/oder Weiterleitung entsprechender Attributsinformationen.

In einer weiteren Ausführungsform kann die Datenverarbeitungseinrichtung, wie bereits angedeutet, sonach eingerichtet sein, das bzw. ein nutzerseitig freigegebene(s) Attribut an das Endgerät des Anfragers nur bei Vorliegen eines Freigabekriteriums zu übertragen. Das Vorliegen eines Freigabekriteriums stellt eine zusätzliche Sicherheitsmaßnahme gegen ein unautorisiertes Frei- bzw. Weitergeben nutzerattributbezogener Daten dar, als ohne Vorliegen des Freigabekriteriums, welcher eine bewusste Frei- bzw. Weitergabehandlung des Nutzers über ein nutzerseitiges Endgerät erfordert, eine Frei- bzw. Weitergabe entsprechender Attributsdatensätze nicht möglich ist. Diese technisch implementierte Einbeziehungsmöglichkeit des Nutzers in den Frei- bzw. Weitergabe nutzerattributbezogener Daten ermöglicht sonach einen deutlichen Sicherheitsgewinn.

In einer weiteren Ausführungsform kann das Freigabekriterium ein Vorliegen eines anfragerseitig erfolgten, insbesondere an den Nutzer gerichteten, Bezahlereignisses für die Übertragung des nutzerseitig berechtigt freigegebenen Attributs an das Endgerät des Anfragers beschreiben. Mithin kann es die Konfiguration des Systems ermöglichen, dass ein Nutzer für die Freigabe von nutzerattributbezogenen Daten "belohnt" wird. Eine Bezahlereignis bzw. ein mit dieser verknüpfter Bezahlvorgang kann prinzipiell auf jedwede Weise realisiert werden. Denkbar ist es z. B., dass ein Anfrager einen Bezahlvorgang über geeignete Software an einen virtuellen Zahlungsempfänger, d. h. z. B. über ein Online-Zahlungsportal, vornehmen kann. Ein entsprechendes Zahlungsportal kann ebenso über die Datenverarbeitungseinrichtung erzeugt bzw. bereitgestellt werden. Bezahlvorgänge können insbesondere unter Nutzung digitaler Zahlungsmittel, d. h. insbesondere so genannter Krypto-Währungen, wie z. B. Bit-Coin, erfolgen, was aufgrund der damit realisierbaren Verschlüsselung von Bezahlvorgängen einen weiteren Sicherheitsgewinn für das System darstellt.

In einer weiteren Ausführungsform kann die erste und/oder die zweite Kommunikationsschnittstelle eingerichtet sein, Daten verschlüsselt zu versenden und/oder zu empfangen. Dies stellt eine weitere Sicherheitsmaßnahme gegen ein unautorisiertes Frei- bzw. Weitergeben nutzerattributbezogener Daten dar, als die Daten verschlüsselt sein bzw. werden können, sodass, die über das System verarbeitbaren und gegebenenfalls austauschbaren Daten selbst bei einem "Datenleck" nicht ohne Weiteres zugänglich sind.

In einer weiteren Ausführungsform kann die Datenverarbeitungseinrichtung sonach eingerichtet sein, Daten, d. h. insbesondere nutzerseitige Angaben zu wenigstens einem abfragekriteriumsbezogenen Attribut, über Prinzipien kryptografisch verketteter einzelner blockartiger Datensätze, mithin insbesondere über Prinzipien der Blockchain, zu verschlüsseln. Mithin kann die Datenverarbeitungseinrichtung eingerichtet sein, Prinzipien kryptografisch verketteter einzelner blockartiger Datensätze zu implementieren, um Daten, wie jeweilige nutzerseitige Angaben zu wenigstens einem abfragekriteriumsbezogenen Attribut, aber auch hieraus erzeugte nutzerbezogene Attribute bzw. Attributsdatensätze, zu verschlüsseln und damit gegen unautorisierten Zugriff zu schützen.

Dabei kann die Datenverarbeitungseinrichtung insbesondere eingerichtet sein, ihrem Inhalt nach unterschiedliche nutzerattributbezogene Daten mit unterschiedlichen Prinzipien der Blockchain zu verschlüsseln. Beispielsweise kann die Datenverarbeitungseinrichtung eingerichtet sein, bestimmte nutzerbezogene Daten, d. h. insbesondere entsprechende Attribute bzw. Attributsdatensätze, z. B. je nach Inhalt, über Prinzipien einer Main-Blockchain oder einer Side-Blockchain zu verschlüsseln. Derart kann gegebenenfalls eine besonders effiziente Verschlüsselung jeweiliger nutzerattributbezogener Daten realisiert werden.

In einer weiteren Ausführungsform kann die Datenverarbeitungseinrichtung eingerichtet sein, die in jeweiligen Attributsdatensätze enthaltenen Attribute, insbesondere automatisiert, im Hinblick auf wenigstens ein Plausibilisierungs- und/oder Verifizierungskriterium zu plausibilisieren und/oder zu verifizieren. Die Datenverarbeitungseinrichtung kann hierfür eine mit geeigneten Plausibilisierungs- und/oder Verifizierungsalgorithmen ausgestattete Plausibilisierungs- und/oder Verifizierungseinrichtung umfassen, welche eingerichtet sind, in jeweiligen Attributsdatensätzen enthaltenen Attribute im Hinblick auf wenigstens ein Plausibilisierungs- und/oder Verifizierungskriterium. Lediglich beispielhaft soll erläutert werden, dass die Datenverarbeitungseinrichtung z. B. bei Angabe eines männlichen Vornamens eines Nutzers, bei gleichzeitiger Angabe eines weiblichen Geschlechts desselben Nutzers, einen möglichen Datenfehler erkennen kann. Entsprechendes gilt selbstverständlich für deutlich komplexer auffindbare Datenfehler. Die Datenverarbeitungseinrichtung kann über entsprechende Plausibilisierungs- und/oder Verifizierungsalgorithmen ebenso eingerichtet sein, nutzerseitige Angaben bzw. daraus erzeugte Attribute mit, z. B. über das Internet, frei zugänglichen Informationen zu dem jeweiligen Nutzer, z. B. Informationen aus sozialen Netzwerken, Webseiten, etc., abzugleichen und entsprechend zu plausibilisieren und/oder zu verifizieren.

Bei Vorliegen entsprechender Datenfehler kann die Datenverarbeitungseinrichtung eingerichtet sein, Nachrichten an den Bereitsteller des Systems und/oder an den jeweiligen Nutzer zu übertragen; diese Nachrichten können eine Aufforderung zur Prüfung und etwaigen Korrektur der Daten beinhalten.

Plausibilisierungs- und/oder Verifizierungsprozesse können, insbesondere bei Einverständnis des jeweiligen Nutzers, gegebenenfalls durch externe Dritte unterstützt werden. Dritte können z. B. öffentliche Einrichtungen, wie z. B. Behörden, Hochschulen, oder Arbeitgeber oder Personen aus dem familiären bzw. sozialen Umfeld eines jeweiligen Nutzers sein, welchen es möglich ist, bestimmte nutzerseitige Angaben, wie z. B. Angaben zu Alter, Namen, Wohnort, Arbeitsverhältnis, etc. zu verifizieren. Beispielsweise kann eine Behörde, wie z. B. ein Einwohneramt, bestätigen, dass ein Nutzer an einer bestimmten Adresse gemeldet ist, ein Arbeitgeber bestätigen, dass ein Nutzer bei ihm als Arbeitnehmer beschäftigt ist, eine Person aus dem sozialen Umfeld bestätigen, dass ein Nutzer bestimmte Hobbies, ein bestimmtes Mediennutzungsverhalten, etc. hat. Sofern entsprechende Dritte über entsprechende Kommunikation mit dem System bestimmte Attribute eines Nutzers verifiziert haben, kann die Datenverarbeitungseinrichtung eingerichtet sin, diese Daten in besonderer Weise zu kennzeichnen, als diese verifizierten Daten für Anfrager von besonderem Interesse sein können. Insgesamt ermöglicht es das System sonach durch eine entsprechende Plausibilisierung und/oder Verifizierung der nutzerattributbezogenen Daten einen möglichst fehlerfreien und plausiblen, gegebenenfalls sogar durch Dritte, verifizierten Datenpool nutzerattributbezogener Daten zu erzeugen und aufrechtzuerhalten. Ein Anfrager erkennt sonach, dass die in der Datenspeichereinrichtung vorliegenden nutzerattributbezogenen Daten "echt" sind, es handelt sich hierbei insbesondere nicht um so genannte Fake-Profile.

In einer weiteren Ausführungsform kann die Datenverarbeitungseinrichtung eingerichtet sein, entsprechende Attributsdatensätze auf Grundlage von, insbesondere über das Internet, zugänglichen Informationen zu einem jeweiligen Nutzer, gegebenenfalls automatisiert, zu aktualisieren. Die Datenverarbeitungseinrichtung kann einem Nutzer sonach, insbesondere bei entsprechendem Einverständnis durch den Nutzer, Aktualisierungen seines Attributsdatensatzes abnehmen, als die Datenverarbeitungseinrichtung über geeignete Recherchealgorithmen Änderungen von Nutzerinformationen, z. B. in sozialen Netzwerken, erkennen und hierauf basierend Änderungen in den jeweiligen nutzerattributbezogenen Daten vornehmen kann. Dies kann mit der vorstehend erläuterten Plausibilisierung und/oder Verifizierung der nutzerattributbezogenen Daten einhergehen.

In einer weiteren Ausführungsform kann die Datenverarbeitungseinrichtung eingerichtet sein, einem Nutzer, etwa über eine Internet-Webseite oder ein Internet-Portal, eine Zugangsmöglichkeit zu einem ihm zugeordneten Attributsdatensatz zu schaffen, sodass der Nutzer einen ihm zugeordneten Attributsdatensatz, selbstständig ändern, d. h. insbesondere Freigabeeinstellungen zu bestimmten Attributen und/oder Freigabeberechtigungen zu bestimmten Anfragern, ändern kann.

In allen Ausführungsformen gilt, dass ein Abfragekriterium wenigstens ein Attribut bzw. wenigstens Attributskategorie aus der folgenden Gruppe an Attributskategorien betrifft persönliche Daten eines Nutzers, wie z. B. Name, Geschlecht, Alter, Biometrie, Größe einzelner oder mehrerer Körperteile, Gewicht, Gesundheit, Herkunft, Ausbildung, Arbeits- bzw. Beschäftigungsverhältnis, berufliche und/oder soziale Stellung, Einkommen, Arbeits- und/oder Wohnort, politische Orientierung, religiöse Orientierung, sexuelle Orientierung, berufliche und/oder freizeitliche geistige Aktivität, berufliche und/oder freizeitliche körperliche Aktivität, Freizeitverhalten, Essverhalten, Trinkverhalten, Sozialverhalten, Work-Life-Balance, und/oder vertragliche Vereinbarungen eines Nutzers mit Bereitstellern von Dienstleistungen und/oder Waren, wie z. B. bestehende Kommunikationsverträge, Leasingverträge, Versicherungsverträge, Mediennutzungsverträge, Behandlungsverträge. Entsprechende Attribute bzw. Attributskategorien können nutzerseitig mit beliebigem Detaillierungsgrad angegeben werden.

Ein besonderes Beispiel eines Attributs bzw. einer Attributskategorie sind Abmessungen zu Körperteilen, wie z. B. Armen, Händen, Beinen, Füßen, oder sonstige, insbesondere messtechnisch erfasste, Informationen zu Körperteilen, wie z. B. Informationen chemischer und/oder physikalischer und/oder physiologischer und/oder medizinischer Informationen. Bei entsprechenden Informationen kann es sich konkret z. B. um, z. B. druckbasierte, Messungen zu Ermittlung der Abmessungen eines Körperteils, wie z. B. eines Fußes oder einer Hand, handeln.

Ein zweiter Aspekt der Erfindung betrifft ein Verfahren zur nutzerseitig autorisierbaren Verarbeitung und Freigabe von nutzerattributbezogenen Daten an einen Anfrager. Das Verfahren umfasst die Schritte:
- Erzeugen und/oder Bereitstellen von, insbesondere nutzerdialogartig implementierten, Abfragekriterien zu bestimmten Attributen einer oder mehrerer Attributskategorien eines Nutzers über eine erste Kommunikationsschnittstelle, insbesondere an ein nutzerseitiges Endgerät;
- Erzeugen, auf Grundlage wenigstens einer über die erste Kommunikationsschnittstelle getätigten nutzerseitigen Angabe zu wenigstens einem Attribut, wenigstens eines die wenigstens eine nutzerseitige Angabe beinhaltenden Attributsdatensatzes, und
- Speichern des wenigstens einen Attributsdatensatzes in einer der Datenverarbeitungseinrichtung zugeordneten, insbesondere Cloud-basierten, Datenspeichereinrichtung;
- Autorisieren einer über eine zweite Kommunikationsschnittstelle erfolgenden Anfrage eines Anfragers an die Datenspeichereinrichtung nach bestimmten Attributsdatensätzen, insbesondere nach bestimmten Attributen wenigstens eines Nutzers, auf Grundlage des Vorliegens wenigstens eines Autorisierungskriteriums; und
- Ermitteln von einer Anfrage des Anfragers entsprechenden Attributsdatensätzen bei Vorliegen des wenigstens einen Autorisierungskriteriums.

Das Verfahren kann insbesondere mit einem System gemäß dem ersten Aspekt der Erfindung implementiert werden.

Sämtliche Ausführungen im Zusammenhang mit dem System gemäß dem ersten Aspekt der Erfindung gelten analog für das Verfahren gemäß dem zweiten Aspekt der Erfindung und umgekehrt.

Die Erfindung ist anhand von Ausführungsbeispielen in den Zeichnungen näher erläutert.

Dabei zeigt die einzige Fig. eine Prinzipdarstellung eines Systems zur nutzerseitig autorisierbaren Verarbeitung und Freigabe von nutzerattributbezogenen Daten an einen Anfrager gemäß einem Ausführungsbeispiel.

Die Fig. zeigt eine Prinzipdarstellung eines Systems 1 zur nutzerseitig autorisierbaren Verarbeitung und Freigabe von nutzerattributbezogenen Daten an einen Anfrager 2 gemäß einem Ausführungsbeispiel.

Das System 1 ist eingerichtet, eine nutzerseitig autorisierbare bzw. freigebbare und somit nutzerseitig kontrollierbare Verarbeitung und Freigabe von nutzerattributbezogenen Daten an einen Anfrager 2, d. h. im Allgemeinen an wenigstens einen externen Dritte, welcher ein Interesse an entsprechenden nutzerbezogenen Daten, etwa zur Ausführung technischer und/oder wirtschaftlicher und/oder medizinischer Prozesse, hat, zu implementieren.

Das computer-implementierte System 1 beinhaltet mehrere hardware- und/oder softwaremäßig implementierbare bzw. implementierte Funktionseinheiten, deren Aufgabe, Funktion und Zusammenwirken im Zusammenhang mit dem Betrieb des Systems nachfolgend im Einzelnen erläutert werden.

Das System 1 umfasst zunächst eine hardware- und/oder softwaremäßig implementierte Datenverarbeitungseinrichtung 3. Die Datenverarbeitungseinrichtung 3 umfasst in an sich üblicherweise wenigstens einen Prozessoreinrichtung 3.1, wenigstens eine Datenspeichereinrichtung 3.2 sowie eine erste und eine zweite Kommunikationsschnittstelle 3.3, 3.4 zur Ausgabe und/oder Eingabe von Daten an einen Abfrager 2 bzw. ein Endgerät 2.1 des Abfragers 2 und/oder an einen Nutzer 4 bzw. ein Endgerät des Nutzers 4.1. Entsprechende Endgeräte 2.1, 4.1 können gegebenenfalls als Clients erachtet werden.

Die Datenverarbeitungseinrichtung 3 kann einen Bestandteil einer durch das System implementierbaren bzw. implementierten Kommunikationsstruktur, d. h. insbesondere einer Netzwerkarchitektur, weiter insbesondere einer Client-Server-Architektur, bilden. In einer entsprechenden Client-Server-Architektur stellt die Datenverarbeitungseinrichtung 3 typischerweise den Server dar, mit welchem ein oder mehrere Clients, d. h. typischerweise abfragerseitige Endgeräte 2.1 und/oder nutzerseitige Endgeräte 4.1, datenverarbeitungsmäßig über ein oder mehrere Kommunikationsschnittstellen 3.3, 3.4 kommunizieren können.

Die erste und/oder die zweite Kommunikationsschnittstelle 3.3, 3.4 können eingerichtet sein, Daten verschlüsselt zu versenden und/oder zu empfangen. Dies stellt eine weitere Sicherheitsmaßnahme gegen ein unautorisiertes Frei- bzw. Weitergeben nutzerattributbezogener Daten dar, als die Daten verschlüsselt sein bzw. werden können, sodass, die über das System verarbeitbaren und gegebenenfalls austauschbaren Daten selbst bei einem "Datenleck" nicht ohne Weiteres zugänglich sind.

Die Datenverarbeitungseinrichtung 3 kann demnach z. B. als Server, d. h. insbesondere als Cloud-Server, ausgebildet bzw. konfiguriert sein oder einen solchen umfassen.

Die Datenverarbeitungseinrichtung 3 ist hardware- und/oder softwaremäßig zur Erzeugung und/oder Bereitstellung von, insbesondere nutzerdialogartig implementierten, Abfragekriterien zu bestimmten Attributen einer oder mehrerer Attributskategorien wenigstens eines Nutzers 4 über die erste Kommunikationsschnittstelle 3.3, insbesondere an ein nutzerseitiges Endgerät 4.1, eingerichtet. Die Datenverarbeitungseinrichtung 3 kann zur Erzeugung und/oder Bereitstellung entsprechender Abfragekriterien zu bestimmten Attributen einer oder mehrerer Attributskategorien wenigstens eines Nutzers 4 eine hardware- und/oder softwaremäßig implementierte Einrichtung 3.5 zur Erzeugung und/oder Bereitstellung entsprechender Abfragekriterien umfassen.

Zur Bereitstellung entsprechender Abfragekriterien an ein nutzerseitiges Endgerät 4.1, wie z. B. ein Handy, Smartphone, Smartwatch, Smartglass, Tablet, Laptop, Desktop, etc., umfasst die Datenverarbeitungseinrichtung die erste Kommunikationsschnittstelle 3.3, über welche die über die Datenverarbeitungseinrichtung 3 erzeugten und/oder bereitgestellten Abfragekriterien an ein nutzerseitiges Endgerät 4.1 bereitgestellt werden können.

Die erste Kommunikationsschnittstelle 3.3 ist insbesondere eingerichtet, eine drahtgebundene oder drahtlose Kommunikationsverbindung mit einem nutzerseitigen Endgerät 4.1 aufzubauen bzw. aufrechtzuerhalten. Im Zusammenhang mit dem Aufbau bzw. der Aufrechterhaltung drahtloser Kommunikationsverbindungen kann die erste Kommunikationsschnittstelle 3.3 z. B. eingerichtet sein, über einen Standard für drahtlose bzw. mobile Kommunikation, insbesondere 4G oder 5G, oder über einen Internet-Standard, insbesondere TCP/IP, mit einem nutzerseitigen Endgerät zu kommunizieren. Standards für mobile Kommunikation können so genannte Mobilfunkstandards der dritten Generation, mithin LTE-Standards, oder Erweiterungen hierzu, wie etwa LTE-Advanced bzw. 4G, sein.

Entsprechende Abfragekriterien können im Rahmen einer über die erste Kommunikationsschnittstelle 3.3 implementierbaren, insbesondere interaktiven, Kommunikation an ein nutzerseitiges Endgerät 4.1 bereitgestellt bzw. übermittelt werden. Die erste Kommunikationsschnittstelle 3.3 kann dabei eine z. B. über eine Webseite, Softwareanwendung (App), etc. implementierte Nutzeroberfläche umfassen, über welche sich entsprechende Abfragekriterien kommunizieren und/oder nutzerseitige Angaben zu entsprechenden Abfragekriterien tätigen lassen. Alternativ oder ergänzend können entsprechende Abfragekriterien z. B. per SMS, Push-message, Email, etc. an ein nutzerseitiges Endgerät 4.1 übertragen werden, sodass entsprechende Abfragekriterien z. B. in Form einer Nachrichtenkette, d. h. insbesondere eines Chats, übertragen werden können.

Eine entsprechende Kommunikation kann, wie erwähnt, z. B. implementiert über eine Softwareanwendung (App), insbesondere (nutzer)dialogartig, d. h. im einfachsten Fall nach dem Prinzip Frage-Antwort, Folgefrage-Folgeantwort, etc., implementiert sein bzw. werden; mithin kann die Datenverarbeitungseinrichtung 3 eingerichtet sein, wenigstens einem Nutzer 4 - ähnlich bzw. analog einem Gespräch zwischen Menschen - auf Grundlage entsprechender Abfragekriterien Fragen stellen, um von dem wenigstens einen Nutzer 4 in Form von nutzerseitigen Eingaben Angaben zu bestimmten Attributen bestimmter Attributskategorien zu erhalten. Konkret kann ein Nutzer 4 über eine Ausgabeschnittstelle 4.1.1, wie z. B. über eine Audio- und/oder Videoschnittstelle, eines nutzerseitigen Endgeräts 4.1 beispielsweise nach bestimmten Informationen, wie z. B. seinem Namen, Alter, Geschlecht, Wohnort, etc., gefragt werden und sodann über entsprechende Eingaben an seinem nutzerseitigen Endgerät 4.1 Angaben zu Abfragekriterien tätigen, welche seitens der Datenverarbeitungseinrichtung 3, z. B. über die Implementierung weiter unten erwähnter Elemente künstlicher Intelligenz, bestimmten Attributen bzw. Attributskategorien zuordenbar sind. Selbstverständlich können parallel oder seriell mehrere Nutzer 4 in entsprechender Weise nach bestimmten nach bestimmten Informationen gefragt und von mehreren Nutzern in entsprechender Weise parallel oder seriell Angaben zu Abfragekriterien getätigt werden.

Die Datenverarbeitungseinrichtung 3 kann sonach wenigstens ein künstliches neuronales Netz umfassen, welches zur Erzeugung und/oder Bereitstellung von, insbesondere nutzerdialogartig implementierten, Abfragekriterien zu bestimmten Attributen einer oder mehrerer Attributskategorien eines Nutzers 4 eingerichtet ist. Insbesondere kann die Datenverarbeitungseinrichtung 3 ein künstliches neuronales Netz umfassen, welches auf Grundlage wenigstens einer über die erste Kommunikationsschnittstelle 3.3 getätigten nutzerseitigen Angabe zu wenigstens einem abfragekriteriumsbezogenen Attribut zur Erzeugung von wenigstens einem die wenigstens eine nutzerseitige Angabe beinhaltenden Attributsdatensatz in der der Datenverarbeitungseinrichtung 3 zugeordneten, insbesondere Cloud-basierten, Datenspeichereinrichtung 3.2 eingerichtet ist,

Die Erzeugung und/oder Bereitstellung entsprechender Abfragekriterien kann sonach unter Verwendung von Elementen künstlicher Intelligenz, d. h. insbesondere künstlicher neuronaler Netze, gegebenenfalls nutzerspezifisch anpassbar, implementiert werden. Mithin kann die Datenverarbeitungseinrichtung 3 insbesondere Elemente künstlicher Intelligenz, d. h. insbesondere künstliche neuronale Netze, umfassen, welche eingerichtet sind, insbesondere unter Berücksichtigung einer oder mehrerer, gegebenenfalls nutzerbezogener Eingangsparameter, Abfragekriterien zu erzeugen und/oder bereitzustellen. Entsprechende Abfragekriterien können sonach z. B. auf Grundlage nutzerbezogener Eingangsparameter nutzerspezifisch erstellt und im Rahmen einer entsprechenden Interaktion mit einem Nutzer 4, gegebenenfalls in Echt-Zeit, angepasst bzw. variiert werden. Beispielsweise ist es denkbar, dass bei Erkennung einer, gegebenenfalls unerwarteten, zeitlichen Verzögerung einer nutzerseitigen Eingabe zu bestimmten Abfragekriterien entschieden wird, einem Nutzer nicht mit anderen Abfragekriterien zu konfrontieren, etwa weil die zeitliche Verzögerung einen Hinweis darauf geben kann, dass ein Nutzer 4 Angaben zu dem Abfragekriterium nicht tätigen möchte. An dieser Stelle ist jedoch allgemein zu bemerken, dass ein Nutzer 4 selbstverständlich die Möglichkeit hat, Angaben zu einzelnen oder mehreren Abfragekriterien aufzuschieben bzw. zu verweigern.

Die Datenverarbeitungseinrichtung 3 ist auf Grundlage wenigstens einer über die erste Kommunikationsschnittstelle 3.3 getätigten nutzerseitigen Angabe zu wenigstens einem abfragekriteriumsbezogenen Attribut zur Erzeugung wenigstens eines die wenigstens eine nutzerseitige Angabe beinhaltenden nutzerbezogenen Attributsdatensatzes, z. B. in Form eines Nutzerprofils, und zur Speicherung des wenigstens einen nutzerbezogenen Attributsdatensatzes in der der Datenverarbeitungseinrichtung 3 zugeordneten Datenspeichereinrichtung 3.2 eingerichtet. Die Datenverarbeitungseinrichtung 3 ist sonach eingerichtet, entsprechende über die erste Kommunikationsschnittstelle 3.3. getätigte nutzerseitige Angabe zu wenigstens einem abfragekriteriumsbezogenen Attribut zu verarbeiten, wobei die Verarbeitung ein Erzeugen nutzerbezogener Attributsdatensätze beinhaltet. Die Datenverarbeitungseinrichtung 3 kann zur Erzeugung wenigstens eines die wenigstens eine nutzerseitige Angabe beinhaltenden nutzerbezogenen Attributsdatensatzes eine hardware- und/oder softwaremäßig implementierte Einrichtung 3.6 zur Erzeugung wenigstens eines die wenigstens eine nutzerseitige Angabe beinhaltenden nutzerbezogenen Attributsdatensatzes umfassen.

Die Verarbeitung entsprechender über die erste Kommunikationsschnittstelle 3.3 getätigter nutzerseitiger Angaben zu entsprechenden nutzerbezogenen Attributsdatensätzen kann eine datenverarbeitungsmäßig implementierte Analyse bzw. Auswertung der jeweiligen nutzerseitigen Angaben nach bestimmten Attributen bzw. Attributskategorien beinhalten. Die Datenverarbeitungseinrichtung 3 kann sonach geeignete Analyse- bzw. Auswertealgorithmen umfassen, welche eingerichtet sind, über die erste Kommunikationsschnittstelle 3.3 getätigte nutzerseitige Angaben zu wenigstens einem abfragekriteriumsbezogenen Attribut nach bestimmten Analyse- bzw. Auswertekriterien zu prüfen, um in den nutzerseitigen Angaben bestimmte Attribute bzw. Attributskategorien zu erkennen. Derart können in einer nutzerseitigen Angabe gegebenenfalls sogar "versteckte" Attribute erkannt werden. Beispielsweise kann durch eine besonders gewählte sprachliche Ausdrucksweise zu einem bestimmten Abfragekriterium auf ein gewisses Bildungsniveau oder eine gewisse Ausbildung eines Nutzers 4 geschlossen werden können. Konkret kann die Verwendung spezieller Fachbegriffe z. B. auf eine Ausbildung eines Nutzers 4 in einem bestimmten Fachbereich, wie z. B. Wissenschaft und Technik, geschlossen werden. Eine solche Ausbildung in einem bestimmten Fachbereich kann ein Beispiel für ein Attribut bzw. eine Attributskategorie sein. Entsprechende Analyse- bzw. Auswertealgorithmen können zudem, z. B. in Form oder als Bestandteil von Audio- und/oder Videoverarbeitungsalgorithmen, eingerichtet sein, bestimmte akustische und/oder optische Merkmale in den z. B. als Audio- und/oder Videodaten vorliegenden nutzerseitigen Eingaben aufzufinden, um in den nutzerseitig getätigten Angaben Attribute bzw. Attributskategorien effizient zu erkennen. In analoger Weise können Bewegungen in Videodaten verarbeitet werden, um Attribute bzw. Attributskategorien zu erkennen. In analoger Weise können auch Prinzipien der Objekterkennung angewandt werden.

Nutzerseitige Angaben können im Allgemeinen auch die, z. B. über einen Upload erfolgende, bewusste nutzerseitige Bereitstellung von Informationen bzw. Informationsstrukturen, z. B. in Form von Datensätzen bzw. Dokumenten, beinhalten kann. Mithin kann ein Nutzer 4 der Datenverarbeitungseinrichtung 3 gezielt Dokumente, wie z. B. Urkunden, Verträge, Lebensläufe, Rechnungen, etc., zumindest auszugsweise bereitstellen, welche seitens der Datenverarbeitungseinrichtung 3 im Hinblick auf bestimmte Attribute bzw. Attributskategorien analysiert bzw. ausgewertet werden.

Konkret kann ein Nutzer 4 z. B. Urkunden, wie z. B. seinen Personalausweis, sein Ausbildungsabschlusszeugnis, etc., oder vertragliche Dokumente, wie z. B. Kauf-, Leasing- oder sonstige Verträge über Dienstleistungen und/oder Waren, wie z. B. Audio- und/oder Videoinhaltbereitstellungsverträge, Fahrzeugverträge, Finanzdienstleistungsverträge, Mobilfunkverträge, Energielieferungsverträge, Versicherungsverträge, Behandlungsverträge, etc., bereitstellen, welche seitens der Datenverarbeitungseinrichtung 3, z. B. unter Verwendung von Prinzipien der Muster- und/oder Texterkennung, im Hinblick auf bestimmte Attribute bzw. Attributskategorien analysiert bzw. ausgewertet werden. Aus einer entsprechenden Analyse bzw. Auswertung kann sich als Attribut z. B. ergeben, dass ein Nutzer 4 zu einer bestimmten ein Abschluss eines neuen Vertrags angeboten werden könnte, weil ein bestehender Vertrag ausläuft. Aus einer entsprechenden Analyse bzw. Auswertung können sich als Attribute sonach allgemein Vertragsbedingungen bzw. -konditionen ableiten lassen. Aus einer entsprechenden Analyse bzw. Auswertung können sich jedoch weitergehende Attribute ableiten lassen; beispielsweise kann erkannt werden, dass ein Nutzer 4 bei Energielieferverträgen langfristige Verträge mit Energielieferanten, welche regenerative Energien liefern, schließt oder kurzfristige Verträge mit Energielieferanten unabhängig davon, ob diese regenerative Energien liefern oder nicht, schließt. Ebenso ist es denkbar, dass durch entsprechende Analyse bzw. Auswertung nutzerseitig getätigter Angaben erkannt werden kann, dass ein Nutzer 4 bestimmte Verträge in Zukunft mit bestehenden oder neuen Anbietern von allen Arten von Dienstleistungen und/oder Waren abschließen möchte oder in Zukunft mit bestehenden oder neuen Anbietern von Dienstleistungen und/oder Waren nicht mehr abschließen möchte. Selbstverständlich kann ein Nutzer 4 solche Angaben auch explizit tätigen.

Sämtliche Analyse- bzw. Auswertealgorithmen der Datenverarbeitungseinrichtung 3 können, wie erwähnt, über Mittel der künstlichen Intelligenz, d. h. insbesondere ein- oder mehrschichtige künstliche neuronale Netze, implementiert sein bzw. werden, welchen in einer Eingabeschicht als Eingangsinformationen entsprechende nutzerseitige Angaben zugeführt werden, die über eine oder mehrere Neuronen bzw. -Zwischenschichten verarbeitet und in einer Ausgabeschicht als bestimmte Attribute bzw. Attributskategorien ausgegeben werden. Entsprechende künstliche neuronale Netze können im Rahmen von Maßnahmen des maschinellen Lernens, z. B. mit Referenzdaten, trainiert worden sein, um eine präzise(re) Zuordnung nutzerseitiger Angaben bzw. darin enthaltener Informationen zu bestimmten Attributen bzw. Attributskategorien zu erreichen.

Die durch Verarbeitung entsprechender nutzerseitiger Angaben erhaltenen nutzerbezogenen Attribute bzw. Attributskategorien können als nutzerbezogene Attributsdatensätze bzw. -sammlungen über die Datenverarbeitungseinrichtung 3 in die dieser zugeordnete, gegebenenfalls Cloud-basierte, Datenspeichereinrichtung 3.2 gespeichert sein bzw. werden. Die Datenspeichereinrichtung 3 kann eingerichtet sein, im Rahmen der Speicherung der Attribute bzw. Attributskategorien eine geeignete Ordnerstruktur zu implementieren. Eine entsprechende Ordnerstruktur kann sowohl eine nutzerbezogene als auch eine übergeordnete Ordnung gespeicherter Attribute bzw. Attributskategorien implementieren, sodass z. B. Abfragen nach bestimmten Attributen zu einem bestimmten Nutzer aber auch allgemeine Abfragen nach Nutzern mit bestimmten Attributen getätigt werden können. Die Implementierung einer entsprechenden Ordnerstruktur kann eine vereinfachte rechnerbasierte Auffindbarkeit und gegebenenfalls Weiterverarbeitbarkeit der in der Datenspeichereinrichtung 3.2 gespeicherten Daten ermöglichen.

Aus vorstehenden Erläuterungen ergibt sich, dass über die Datenverarbeitungseinrichtung 3 diverse nutzerbezogene Informationen gesammelt werden können, welche für Anfrager 2, d. h. im Allgemeinen für externe Dritte und im Besonderen für Anbieter von Dienstleistungen und/oder Waren, von besonderem Interesse sein können, sodass hier ein besonderes technisches Schutzbedürfnis dahin besteht, dass diese Daten nicht unautorisiert, d. h. insbesondere nicht ohne Einverständnis des jeweiligen Nutzers 4, an entsprechende Dritte weitergebbar sind. Der im Weiteren verwendete Begriff "Anfrager" (Requester) kann sich auf entsprechende externe Dritte bzw. Anbieter von Dienstleistungen und/oder Waren beziehen.

Um dieser bereits eingangs erwähnten Herausforderung einer sicheren Verarbeitung, Speicherung und etwaigen Freigabe entsprechender nutzerbezogener Daten an Anfrager 2 gerecht zu werden, umfasst das System 1 eine hardware- und/oder softwaremäßig implementierte Autorisierungseinrichtung 5, welche zur Autorisierung einer über die zweite Kommunikationsschnittstelle 3.4 erfolgenden Anfrage eines Anfragers 2 an die Datenspeichereinrichtung 3.2 nach bestimmten Attributsdatensätzen, insbesondere nach bestimmten Attributen wenigstens eines Nutzers 4, auf Grundlage des Vorliegens wenigstens eines Autorisierungskriteriums eingerichtet ist. Die Autorisierungseinrichtung 5 ist sonach eingerichtet, eine Anfrage eines Anfragers 2 an die Datenspeichereinrichtung 3.2 nach bestimmten Attributsdatensätzen, insbesondere nach bestimmten Attributen wenigstens eines Nutzers 4, nur bei Vorliegen wenigstens eines Autorisierungskriteriums zu autorisieren, sodass ein Anfrager 2 nur bei Vorliegen wenigstens eines Autorisierungskriteriums die Möglichkeit hat, überhaupt entsprechende Anfragen an die Datenspeichereinrichtung 3.2 zu stellen. Über die Autorisierungseinrichtung 5 ist sonach eine sehr frühzeitig und damit sehr effizient wirkende technische Hürde implementiert, welche einen unautorisierten Zugriff auf die Datenspeichereinrichtung 3.2 respektive in der Datenspeichereinrichtung 3.2 gespeicherte Attributsdatensätze ohne Vorliegen wenigstens eines Autorisierungskriteriums nicht möglich macht. Ein entsprechender Zugriff auf die Datenspeichereinrichtung 3.2 respektive in der Datenspeichereinrichtung 3.2 gespeicherte Attributsdatensätzen kann, wie erwähnt, nur bei Vorliegen wenigstens eines Autorisierungskriteriums erfolgen.

Ein entsprechendes Autorisierungskriterium kann z. B. ein Vorliegen eines anfragerseitig erfolgten, insbesondere an den Betreiber des Systems 1 gerichteten, Bezahlereignisses für die Anfragemöglichkeit nach bestimmten in der Datenspeichereinrichtung 3.2 gespeicherten Attributsdatensätzen beschreibt. Selbstverständlich ist alternativ oder ergänzend die Implementierung anderer Autorisierungskriterien, wie z. B. eines Autorisieriungskriteriums in Form einer Prüfung eines anfragerseitigen Endgeräts 2.1 im Hinblick auf technische Kompatibilität mit dem System 1, denkbar.

Die Autorisierungseinrichtung 5 wirkt sonach mit der Datenverarbeitungseinrichtung 3 derart zusammen, dass die Datenverarbeitungseinrichtung 3 eingerichtet ist, (nur) bei Vorliegen des wenigstens einen Autorisierungskriteriums - dieses kann über die Autorisierungseinrichtung 5 gegebenenfalls im Hinblick auf ein oder mehrere Gültigkeitskriterien geprüft werden - Attributsdatensätze zu ermitteln, welche einer Anfrage des Anfragers 2 entsprechen. Die Autorisierungseinrichtung 5 kann sonach als eine die Datenverarbeitungseinrichtung 3 und die Datenspeichereinrichtung 3.2 umgebende Datensicherheitsstruktur verstanden werden, welche die durch die Datenverarbeitungseinrichtung 3 erzeugte und in der Datenspeichereinrichtung 3.2 gespeicherten nutzerbezogenen Daten in Form entsprechender Attribute bzw. Attributskategorien nur unter bestimmten Bedingungen freizugeben.

Wie sich im Weiteren ergibt, kann das Vorliegen eines entsprechenden Autorisierungskriteriums zusätzlich mit dem Vorliegen eines gesonderten nutzerseitigen Freigabekriteriums verknüpft sein, sodass ein "Zugriff" auf in der Datenspeichereinrichtung 3.2 gespeicherte nutzerbezogene Daten durch einen Anfrager 2 nur bei Vorliegen des Autorisierungskriteriums als auch des Vorliegens eines gesonderten nutzerseitigen Freigabekriteriums möglich ist.

Die eine Kommunikation mit einem Endgerät 2.1 eines Anfragers 2 ermöglichende zweite Kommunikationsschnittstelle 3.4 kann analog der ersten Kommunikationsschnittstelle 3.3 konfiguriert sein; mithin ist auch die zweite Kommunikationsschnittstelle 3.4 insbesondere eingerichtet, eine drahtgebundene oder drahtlose Kommunikationsverbindung mit einem anfragerseitigen Endgerät 2.1, wie z. B. einem Handy, Smartphone, Smartwatch, Smartglass, Tablet, Laptop-Computer, Desktop-Computer, etc., aufzubauen bzw. aufrechtzuerhalten. Im Zusammenhang mit dem Aufbau bzw. der Aufrechterhaltung drahtloser Kommunikationsverbindungen kann die zweite Kommunikationsschnittstelle z. B. eingerichtet sein, über einen Standard für drahtlose bzw. mobile Kommunikation, insbesondere 4G oder 5G, oder über einen Internet-Standard, insbesondere TCP/IP, mit einem nutzerseitigen Endgerät zu kommunizieren. Standards für mobile Kommunikation können so genannte Mobilfunkstandards der dritten Generation, mithin LTE-Standards, oder Erweiterungen hierzu, wie etwa LTE-Advanced bzw. 4G, sein.

Die zweite Kommunikationsschnittstelle 3.4 kann analog der ersten Kommunikationsschnittstelle 3.3 eine z. B. über eine Webseite, Softwareanwendung (App), etc. implementierte Nutzeroberfläche umfassen, über welche sich (bei Vorliegen eines entsprechenden Autorisierungskriteriums, anfragerseitige Angaben zu nutzerbezogenen Daten, d. h. insbesondere nutzerbezogenen Attributen bzw. Attributskategorien, tätigen lassen.

Die Datenverarbeitungseinrichtung 3 kann eingerichtet sein, entsprechende Abfragekriterien auf Grundlage von, insbesondere über das Internet 6, (frei) zugänglichen Informationen zu einem jeweiligen Nutzer 4 zu erzeugen. Die Datenverarbeitungseinrichtung 3 kann sonach eingerichtet sein, auf Grundlage von zugänglichen Informationen zu einem jeweiligen Nutzer 4 nutzerspezifische Abfragekriterien zu erzeugen, was die Effizienz der Erzeugung entsprechender Attributsdatensätze, z. B. aufgrund eines reduzierten Rechenaufwands, steigern kann, als die Datenverarbeitungseinrichtung 3 bereits über gewisse Basisinformation zu einem Nutzer 4 verfügen kann, sodass diesbezügliche Abfragekriterien z. B. vermieden werden können, als die durch die Abfragekriterien zu erzeugenden Attribute über anderweitige Informationsquellen verfügbar sind. Selbstverständlich kann die Datenverarbeitungseinrichtung 3 auch eingerichtet sein, entsprechende zugänglichen Informationen zu einem jeweiligen Nutzer 4 im Rahmen nutzerdialogartig implementierter Abfragekriterien zu verwenden. Die Datenverarbeitungseinrichtung 3 kann einem Nutzer 4 im Rahmen eines entsprechenden Dialogs z. B. fragen, ob er noch in der Abteilung X bei dem Unternahmen Y beschäftigt ist, wie es z. B. auf einer Internet-Webseite bzw. Internetplattform beschrieben ist.

Die Datenverarbeitungseinrichtung 3 kann ferner eingerichtet sein, Abfragekriterien nutzerdialogartig implementiert nach einer vordefinierten Abfragereihenfolge bzw. -logik geordnet abzufragen. Die Implementierung einer entsprechenden Abfragereihenfolge bzw. -logik kann die Erzeugung entsprechender Attributsdatensätze, insbesondere aufgrund eines reduzierten Rechenaufwands, effizienter gestalten, als die nutzerseitigen Angaben typischerweise in einer gewissen logischen Beziehung, z. B. bedingt durch eine gewisse thematische Nähe, stehen, was die rechnerbasierte Zuordnung der nutzerseitigen Angaben zu Attributen bzw. Attributskategorien vereinfachen kann.

Die Datenverarbeitungseinrichtung 3 kann ferner eingerichtet sein, Abfragekriterien nutzerdialogartig implementiert, gegebenenfalls über eine z. B. als App implementierte, virtuelle Dialogassistenzanwendung, über einen Audio- und/oder Videodialog abzufragen. Derart kann eine effiziente und praktikable Erfassung nutzerattributbezogener Daten erfolgen.

Die Datenverarbeitungseinrichtung 3 kann ferner bei Vorliegen des wenigstens einen Autorisierungskriteriums zur Ausgabe von einer Anfrage des Anfragers 2 entsprechenden Attributsdatensätzen an ein Endgerät 2.1 des Anfragers 2 über die zweite Kommunikationsschnittstelle 3.4 eingerichtet sein. Das durch die Autorisierungseinrichtung 5 ermittelbare bzw. ermittelte Vorliegen des wenigstens eines Autorisierungskriteriums kann sonach Bedingung dafür sein, dass an ein Endgerät 2.1 des Anfragers 2 Attributsdatensätze, welche einer Anfrage des Anfragers 2 entsprechen, ausgebbar sind. Dies stellt eine weitere Sicherheitsmaßnahme gegen ein unautorisiertes Frei- bzw. Weitergeben nutzerattributbezogener Daten dar, als ohne Vorliegen des Autorisierungskriteriums eine Ausgabe entsprechender Attributsdatensätze nicht möglich ist.

Die Datenverarbeitungseinrichtung 3 kann ferner bei Vorliegen des wenigstens einen Autorisierungskriteriums zur Ausgabe von einer Anfrage des Anfragers 2 entsprechenden Attributsdatensätzen an ein Endgerät 2.1 des Anfragers 2 über die zweite Kommunikationsschnittstelle 3.4 eingerichtet sein, wobei die Attributsdatensätze zunächst anonymisiert ausgegeben sind. Dies stellt eine weitere Sicherheitsmaßnahme gegen ein unautorisiertes Frei- bzw. Weitergeben nutzerattributbezogener Daten dar, als die Attributsdatensätze zunächst anonymisiert ausgegeben, sodass einem Anfrager 2 keine Zuordnung entsprechender Attributsdatensätze zu bestimmten Nutzern 4 möglich ist. Der Anfrager 2 erhält sonach zunächst nur eine Information darüber, dass seiner Anfrage entsprechende Attributsdatensätze in der Datenspeichereinrichtung 3.2 vorhanden sind.

Die Datenverarbeitungseinrichtung 3 kann ferner eingerichtet sein, eine über die zweite Kommunikationsschnittstelle 3.4 anfragerseitig erhaltene Auswahl wenigstens eines an den Anfrager 2 ausgegebenen Attributsdatensatzes zu verarbeiten. Mithin kann die Datenverarbeitungseinrichtung 3 eingerichtet sein, ein oder mehrere Attributsdatensätze aus einer anfragerseitigen Auswahl aus an diesen - bei entsprechender Autorisierung - ausgegebenen Attributsdatensätzen in besonderer Weise zu verarbeiten. Wie sich im Weiteren ergibt, kann die besondere Verarbeitung entsprechender anfragerseitig ausgewählter Attributsdatensätze eine weitere Sicherheitsstufe gegen ein unautorisiertes Frei- bzw. Weitergeben nutzerattributbezogener Daten durch Implementierung der Möglichkeit einer bewussten nutzerseitigen Freigabe darstellen, indem die Frei- bzw. Weitergeben nutzerattributbezogener Daten eine bewusste nutzerseitige Freigabe erfordert. Diese Konfiguration des Systems 1 ermöglicht sonach eine gezielte Einbeziehung jeweiliger Nutzer 4 in die Autorisierung bzw. Freigabe nutzerbezogener Daten an einen Anfrager 2, sodass eine nutzerseitig autorisierbare Verarbeitung und Freigabe von nutzerattributbezogener Daten möglich ist.

Die Datenverarbeitungseinrichtung 3 kann ferner eingerichtet sein, basierend auf einer über die zweite Kommunikationsschnittstelle 3.4 anfragerseitig erhaltenen Auswahl wenigstens eines an den Anfrager ausgegebenen Attributsdatensatzes über die erste Kommunikationsschnittstelle 3.3. eine Freigabeberechtigungsanfrage, ob der jeweilige Nutzer 4 eine Freigabe von wenigstens einem Attribut aus seinem Attributsdatensatz über die zweite Kommunikationsschnittstelle 3.4 an den Anfrager 2 berechtigt, an ein Endgerät 4.1 des einem anfragerseitig ausgewählten Attributsdatensatzes zugehörigen Nutzers 4 zu erzeugen und zu übertragen. Mithin kann die Datenverarbeitungseinrichtung 3 in Fällen, in welchen eine anfragerseitig erhaltene Auswahl wenigstens eines an den Anfrager 2 ausgegebenen Attributsdatensatzes gegeben ist, eingerichtet sein, eine Freigabeberechtigungsanfrage zu erzeugen, ob der jeweilige Nutzer 4 eine Freigabe von wenigstens einem Attribut aus seinem Attributsdatensatz über die zweite Kommunikationsschnittstelle 3.4 an den Anfrager 2 berechtigt, und eine solche Freigabeberechtigungsanfrage über die erste Kommunikationsschnittstelle 3.3. an das Endgerät 4.1 des jeweiligen Nutzers 4 zu übertragen. Derart ist eine weitere Sicherheitsstufe gegen ein unautorisiertes Frei- bzw. Weitergeben nutzerattributbezogener Daten auf Grundlage einer bewussten nutzerseitigen Freigabe implementiert. Diese Konfiguration des Systems 1 implementiert sonach eine gezielte Einbeziehung jeweiliger Nutzer 4 in die Autorisierung bzw. Freigabe nutzerbezogener Daten an einen Anfrager 2.

Die Datenverarbeitungseinrichtung 3 kann eingerichtet sein, über die zweite Kommunikationsschnittstelle 3.4 wenigstens ein nutzerseitig freigegebenes Attribut an ein Endgerät 2.1 des Anfragers 2 zu übertragen. Die Übertragung des jeweiligen Attributs an das Endgerät 2.1 des Anfragers 2 erfolgt sonach nur dann, wenn hierzu eine gesonderte Freigabe des jeweiligen Nutzers 4 vorliegt. Eine entsprechende Übertragung kann in Form einer, gegebenenfalls verschlüsselten, Attributsinformation erfolgen, welche das oder die jeweiligen Attribute beschreibt. Die Verschlüsselung der Attributsinformation kann eine bestimmte sachliche und/oder örtliche und/oder zeitliche Nutzung der Attributsinformation beinhalten. Mithin können entsprechende Attributsinformationen, z. B. durch geeignete Verschlüsselungsmaßnahmen, nur unter beststimmten örtlichen und/oder zeitlichen und/oder sachlichen Bedingungen genutzt werden. Dies betrifft z. B. auch die, sonach gegebenenfalls beschränkbare bzw. beschränkte, Möglichkeit der Anzahl der Nutzung und/oder Weiterleitung entsprechender Attributsinformationen.

Die Datenverarbeitungseinrichtung 3 kann, wie bereits angedeutet, sonach ferner eingerichtet sein, das bzw. ein nutzerseitig freigegebene(s) Attribut an das Endgerät 2.1 des Anfragers 2 nur bei Vorliegen eines Freigabekriteriums zu übertragen. Das Vorliegen eines Freigabekriteriums stellt eine zusätzliche Sicherheitsmaßnahme gegen ein unautorisiertes Frei- bzw. Weitergeben nutzerattributbezogener Daten dar, als ohne Vorliegen des Freigabekriteriums, welcher eine bewusste Frei- bzw. Weitergabehandlung des Nutzers 4 über ein nutzerseitiges Endgerät 4.1 erfordert, eine Frei- bzw. Weitergabe entsprechender Attributsdatensätze nicht möglich ist. Diese technisch implementierte Einbeziehungsmöglichkeit des Nutzers 4 in den Frei- bzw. Weitergabe nutzerattributbezogener Daten ermöglicht sonach einen deutlichen Sicherheitsgewinn.

Das Freigabekriterium kann ein Vorliegen eines anfragerseitig erfolgten, insbesondere an den Nutzer 4 gerichteten, Bezahlereignisses für die Übertragung des nutzerseitig berechtigt freigegebenen Attributs an das Endgerät 2.1 des Anfragers 2 beschreiben. Mithin kann es die Konfiguration des Systems 1 ermöglichen, dass ein Nutzer 4 für die Freigabe von nutzerattributbezogenen Daten "belohnt" wird. Eine Bezahlereignis bzw. ein mit dieser verknüpfter Bezahlvorgang kann prinzipiell auf jedwede Weise realisiert werden. Denkbar ist es z. B., dass ein Anfrager 2 einen Bezahlvorgang über geeignete Software an einen virtuellen Zahlungsempfänger, d. h. z. B. über ein Online-Zahlungsportal, vornehmen kann. Ein entsprechendes Zahlungsportal kann ebenso über die Datenverarbeitungseinrichtung 3 erzeugt bzw. bereitgestellt werden. Bezahlvorgänge können insbesondere unter Nutzung digitaler Zahlungsmittel, d. h. insbesondere so genannter Krypto-Währungen, wie z. B. Bit-Coin, erfolgen, was aufgrund der damit realisierbaren Verschlüsselung von Bezahlvorgängen einen weiteren Sicherheitsgewinn für das System 1 darstellt.

Die Datenverarbeitungseinrichtung 3 kann eingerichtet sein, Daten, d. h. insbesondere nutzerseitige Angaben zu wenigstens einem abfragekriteriumsbezogenen Attribut, über Prinzipien kryptografisch verketteter einzelner blockartiger Datensätze, mithin insbesondere über Prinzipien der Blockchain, zu verschlüsseln. Mithin kann die Datenverarbeitungseinrichtung 3 eingerichtet sein, Prinzipien kryptografisch verketteter einzelner blockartiger Datensätze zu implementieren, um Daten, wie jeweilige nutzerseitige Angaben zu wenigstens einem abfragekriteriumsbezogenen Attribut, aber auch hieraus erzeugte nutzerbezogene Attribute bzw. Attributsdatensätze, zu verschlüsseln und damit gegen unautorisierten Zugriff zu schützen.

Dabei kann die Datenverarbeitungseinrichtung 3 insbesondere eingerichtet sein, ihrem Inhalt nach unterschiedliche nutzerattributbezogene Daten mit unterschiedlichen Prinzipien der Blockchain zu verschlüsseln. Beispielsweise kann die Datenverarbeitungseinrichtung 3 eingerichtet sein, bestimmte nutzerbezogene Daten, d. h. insbesondere entsprechende Attribute bzw. Attributsdatensätze, z. B. je nach Inhalt, über Prinzipien einer Main-Blockchain oder einer Side-Blockchain zu verschlüsseln. Derart kann gegebenenfalls eine besonders effiziente Verschlüsselung jeweiliger nutzerattributbezogener Daten realisiert werden.

Die Datenverarbeitungseinrichtung 3 kann ferner eingerichtet sein, die in jeweiligen Attributsdatensätze enthaltenen Attribute, insbesondere automatisiert, im Hinblick auf wenigstens ein Plausibilisierungs- und/oder Verifizierungskriterium zu plausibilisieren und/oder zu verifizieren. Die Datenverarbeitungseinrichtung 3 kann hierfür eine mit geeigneten Plausibilisierungs- und/oder Verifizierungsalgorithmen ausgestattete Plausibilisierungs- und/oder Verifizierungseinrichtung 3.7 umfassen, welche eingerichtet sind, in jeweiligen Attributsdatensätzen enthaltenen Attribute im Hinblick auf wenigstens ein Plausibilisierungs- und/oder Verifizierungskriterium. Lediglich beispielhaft soll erläutert werden, dass die Datenverarbeitungseinrichtung 3 z. B. bei Angabe eines männlichen Vornamens eines Nutzers, bei gleichzeitiger Angabe eines weiblichen Geschlechts desselben Nutzers, einen möglichen Datenfehler erkennen kann. Entsprechendes gilt selbstverständlich für deutlich komplexer auffindbare Datenfehler. Die Datenverarbeitungseinrichtung 3 kann über entsprechende Plausibilisierungs- und/oder Verifizierungsalgorithmen ebenso eingerichtet sein, nutzerseitige Angaben bzw. daraus erzeugte Attribute mit, z. B. über das Internet 6, frei zugänglichen Informationen zu dem jeweiligen Nutzer 4, z. B. Informationen aus sozialen Netzwerken, Webseiten, etc., abzugleichen und entsprechend zu plausibilisieren und/oder zu verifizieren.

Bei Vorliegen entsprechender Datenfehler kann die Datenverarbeitungseinrichtung 3 eingerichtet sein, Nachrichten an den Bereitsteller des Systems 1 und/oder an den jeweiligen Nutzer 4 zu übertragen; diese Nachrichten können eine Aufforderung zur Prüfung und etwaigen Korrektur der Daten beinhalten.

Plausibilisierungs- und/oder Verifizierungsprozesse können, insbesondere bei Einverständnis des jeweiligen Nutzers 4, gegebenenfalls durch externe Dritte (nicht gezeigt) unterstützt werden. Dritte können z. B. öffentliche Einrichtungen, wie z. B. Behörden, Hochschulen, oder Arbeitgeber oder Personen aus dem familiären bzw. sozialen Umfeld eines jeweiligen Nutzers 4 sein, welchen es möglich ist, bestimmte nutzerseitige Angaben, wie z. B. Angaben zu Alter, Namen, Wohnort, Arbeitsverhältnis, etc. zu verifizieren. Beispielsweise kann eine Behörde, wie z. B. ein Einwohneramt, bestätigen, dass ein Nutzer 4 an einer bestimmten Adresse gemeldet ist, ein Arbeitgeber bestätigen, dass ein Nutzer 4 bei ihm als Arbeitnehmer beschäftigt ist, eine Person aus dem sozialen Umfeld bestätigen, dass ein Nutzer 4 bestimmte Hobbies, ein bestimmtes Mediennutzungsverhalten, etc. hat. Sofern entsprechende Dritte über entsprechende Kommunikation mit dem System 1 bestimmte Attribute eines Nutzers 4 verifiziert haben, kann die Datenverarbeitungseinrichtung 3 eingerichtet sin, diese Daten in besonderer Weise zu kennzeichnen, als diese verifizierten Daten für Anfrager 2 von besonderem Interesse sein können. Insgesamt ermöglicht es das System 1 sonach durch eine entsprechende Plausibilisierung und/oder Verifizierung der nutzerattributbezogenen Daten einen möglichst fehlerfreien und plausiblen, gegebenenfalls sogar durch Dritte, verifizierten Datenpool nutzerattributbezogener Daten zu erzeugen und aufrechtzuerhalten. Ein Anfrager 2 erkennt sonach, dass die in der Datenspeichereinrichtung 3.2 vorliegenden nutzerattributbezogenen Daten "echt" sind, es handelt sich hierbei insbesondere nicht um so genannte Fake-Profile.

Die Datenverarbeitungseinrichtung 3 kann ferner eingerichtet sein, entsprechende Attributsdatensätze auf Grundlage von, insbesondere über das Internet 6, zugänglichen Informationen zu einem jeweiligen Nutzer 4, gegebenenfalls automatisiert, zu aktualisieren. Die Datenverarbeitungseinrichtung kann einem Nutzer 4 sonach, insbesondere bei entsprechendem Einverständnis durch den Nutzer 4, Aktualisierungen seines Attributsdatensatzes abnehmen, als die Datenverarbeitungseinrichtung 3 über geeignete Recherchealgorithmen Änderungen von Nutzerinformationen, z. B. in sozialen Netzwerken, erkennen und hierauf basierend Änderungen in den jeweiligen nutzerattributbezogenen Daten vornehmen kann. Dies kann mit der vorstehend erläuterten Plausibilisierung und/oder Verifizierung der nutzerattributbezogenen Daten einhergehen.

Die Datenverarbeitungseinrichtung 3 kann ferner eingerichtet sein, einem Nutzer 4, etwa über eine Internet-Webseite oder ein Internet-Portal, eine Zugangsmöglichkeit zu einem ihm zugeordneten Attributsdatensatz zu schaffen, sodass der Nutzer 4 einen ihm zugeordneten Attributsdatensatz, selbstständig ändern, d. h. insbesondere Freigabeeinstellungen zu bestimmten Attributen und/oder Freigabeberechtigungen zu bestimmten Anfragern 2, ändern kann.

Die erste und die zweite Kommunikationsschnittstelle 3.3, 3.4 können auch als eine gemeinsame Kommunikationsschnittstelle ausgebildet sein, welche sowohl zur Kommunikation mit wenigstens einem Anfrager 2 als auch mit wenigstens einem Nutzer 4 eingerichtet ist.

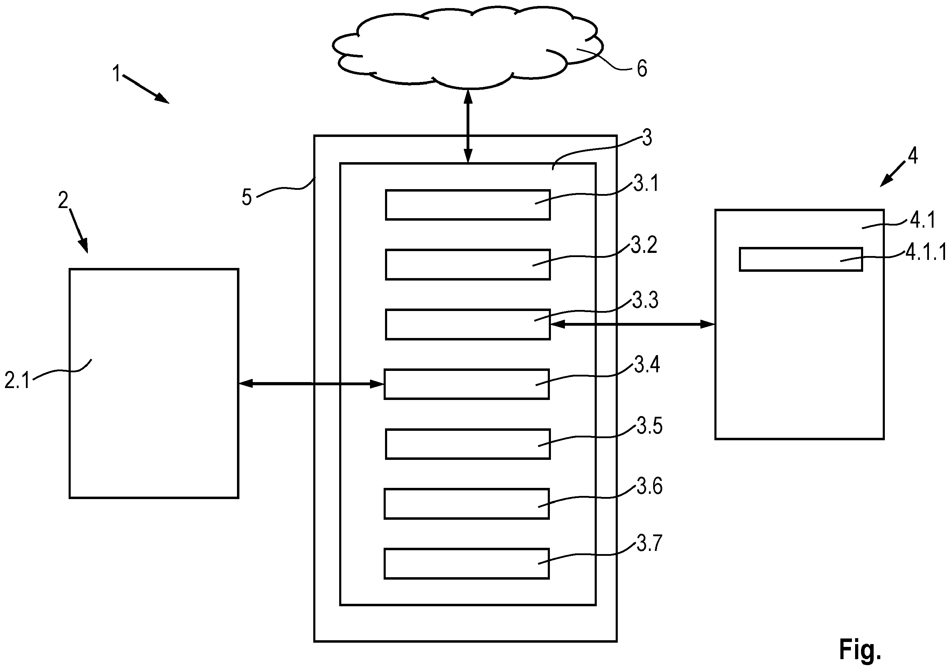

Mit dem in Fig. 1 gezeigten System 1 lässt sich ein Verfahren zur nutzerseitig autorisierbaren Verarbeitung und Freigabe von nutzerattributbezogenen Daten an einen Anfrager 2 implementieren. Das Verfahren umfasst die Schritte:
- Erzeugen und/oder Bereitstellen von, insbesondere nutzerdialogartig implementierten, Abfragekriterien zu bestimmten Attributen einer oder mehrerer Attributskategorien eines Nutzers 4 über eine erste Kommunikationsschnittstelle 3.3, insbesondere an ein nutzerseitiges Endgerät 4.1;
- Erzeugen, auf Grundlage wenigstens einer über die erste Kommunikationsschnittstelle getätigten nutzerseitigen Angabe zu wenigstens einem Attribut, wenigstens eines die wenigstens eine nutzerseitige Angabe beinhaltenden Attributsdatensatzes, und
- Speichern des wenigstens einen Attributsdatensatzes in einer der Datenverarbeitungseinrichtung 3 zugeordneten, insbesondere Cloud-basierten, Datenspeichereinrichtung 3.2;
- Autorisieren einer über eine zweite Kommunikationsschnittstelle 3.4 erfolgenden Anfrage eines Anfragers an die Datenspeichereinrichtung 3.2 nach bestimmten Attributsdatensätzen, insbesondere nach bestimmten Attributen wenigstens eines Nutzers 4, auf Grundlage des Vorliegens wenigstens eines Autorisierungskriteriums; und
- Ermitteln von einer Anfrage des Anfragers 2 entsprechenden Attributsdatensätzen bei Vorliegen des wenigstens einen Autorisierungskriteriums.

Bestimmte Merkmale der Erfindung sind in den nachfolgenden Aspekten nochmals beispielhaft dargestellt:
1. System (1) zur nutzerseitig autorisierbaren Verarbeitung und Freigabe von nutzerattributbezogenen Daten an einen Anfrager (2), umfassend:
   - eine Datenverarbeitungseinrichtung (3), welche
      zur Erzeugung und/oder Bereitstellung von, insbesondere nutzerdialogartig implementierten, Abfragekriterien zu bestimmten Attributen einer oder mehrerer Attributskategorien eines Nutzers (4) über eine erste Kommunikationsschnittstelle (3.3), insbesondere an ein nutzerseitiges Endgerät (4.1), und
      auf Grundlage wenigstens einer über die erste Kommunikationsschnittstelle (3.3) getätigten nutzerseitigen Angabe zu wenigstens einem abfragekriteriumsbezogenen Attribut zur Erzeugung wenigstens eines die wenigstens eine nutzerseitige Angabe beinhaltenden nutzerbezogenen Attributsdatensatzes und zur Speicherung des wenigstens einen nutzerbezogenen Attributsdatensatzes in einer der Datenverarbeitungseinrichtung (3) zugeordneten, insbesondere Cloud-basierten, Datenspeichereinrichtung (3.2) eingerichtet ist,
   - eine Autorisierungseinrichtung (5), welche zur Autorisierung einer über eine zweite Kommunikationsschnittstelle (3.4) erfolgenden Anfrage eines Anfragers (2) an die Datenspeichereinrichtung (3.2) nach bestimmten Attributsdatensätzen, insbesondere nach bestimmten Attributen wenigstens eines Nutzers (4), auf Grundlage des Vorliegens wenigstens eines Autorisierungskriteriums eingerichtet ist,
      wobei die Datenverarbeitungseinrichtung (3) bei Vorliegen des wenigstens einen Autorisierungskriteriums zur Ermittlung wenigstens eines einer Anfrage des Anfragers (2) entsprechenden Attributsdatensatzes eingerichtet ist.
2. System nach Aspekt 1, wobei die Datenverarbeitungseinrichtung (3) bei Vorliegen des wenigstens einen Autorisierungskriteriums zur Ausgabe von einer Anfrage des Anfragers (2) entsprechenden Attributsdatensätzen an ein Endgerät (2.1) des Anfragers (2) über die zweite Kommunikationsschnittstelle (3.4) eingerichtet ist.
3. System nach Aspekt 2, wobei die Datenverarbeitungseinrichtung (3) bei Vorliegen des wenigstens einen Autorisierungskriteriums zur Ausgabe von einer Anfrage des Anfragers (2) entsprechenden Attributsdatensätzen an ein Endgerät (2.1) des Anfragers (2) über die zweite Kommunikationsschnittstelle (3.4) eingerichtet ist, wobei die Attributsdatensätze zunächst anonymisiert ausgegeben sind.
4. System nach einem der vorhergehenden Aspekte, wobei das Autorisierungskriterium ein Vorliegen eines anfragerseitig erfolgten, insbesondere an den Betreiber der Datenverarbeitungseinrichtung (3) gerichteten, Bezahlereignisses für die Anfragemöglichkeit nach bestimmten in der Datenspeichereinrichtung (3.2) gespeicherten Attributsdatensätzen beschreibt.
5. System nach einem der vorhergehenden Aspekte, wobei die Datenverarbeitungseinrichtung (3) eingerichtet ist, eine über die zweite Kommunikationsschnittstelle (3.4) anfragerseitig erhaltene Auswahl wenigstens eines an den Anfrager ausgegebenen Attributsdatensatzes zu verarbeiten.
6. System nach Aspekt 5, wobei die Datenverarbeitungseinrichtung (3) eingerichtet ist, basierend auf einer über die zweite Kommunikationsschnittstelle (3.4) anfragerseitig erhaltenen Auswahl wenigstens eines an den Anfrager (2) ausgegebenen Attributsdatensatzes über die erste Kommunikationsschnittstelle (3.3) eine Freigabeberechtigungsanfrage, ob der jeweilige Nutzer (4) eine Freigabe von wenigstens einem Attribut aus seinem Attributsdatensatz über die zweite Kommunikationsschnittstelle (3.4) an den Anfrager (2) berechtigt, an ein Endgerät (4.1) des einem anfragerseitig ausgewählten Attributsdatensatzes zugehörigen Nutzers (4) zu erzeugen und zu übertragen.
7. System nach Aspekt 6, wobei die Datenverarbeitungseinrichtung (3) eingerichtet ist, über die zweite Kommunikationsschnittstelle (3.4) ein nutzerseitig freigegebenes Attribut an ein Endgerät (2.1) des Anfragers (2) zu übertragen.
8. System nach Aspekt 7, wobei Datenverarbeitungseinrichtung (3) eingerichtet ist, das nutzerseitig freigegebene Attribut an das Endgerät (2.1) des Anfragers (2) nur bei Vorliegen eines Freigabekriteriums zu übertragen.
9. System nach Aspekt 8, wobei das Freigabekriterium ein ein Vorliegen eines anfragerseitig erfolgten, insbesondere an den Nutzer (4) gerichteten, Bezahlereignisses für die Übertragung des nutzerseitig berechtigt freigegebenen Attributs an das Endgerät (2.1) des Anfragers (2) beschreibt.
10. System nach einem der vorhergehenden Aspekte, wobei die erste und/oder zweite Kommunikationsschnittstelle (3.3, 3.4) eingerichtet ist, Daten verschlüsselt zu versenden und/oder zu empfangen.
11. System nach Aspekt 10, wobei die Datenverarbeitungseinrichtung (3) eingerichtet ist, Daten, d. h. insbesondere nutzerseitige Angabe zu wenigstens einem Attribut, über Prinzipien kryptografisch verketteter einzelner blockartiger Datensätze zu verschlüsseln.
12. System nach einem der vorhergehenden Aspekte, wobei die Datenverarbeitungseinrichtung (3) eingerichtet ist, die in jeweiligen Attributsdatensätzen enthaltenen Attribute, insbesondere automatisiert, im Hinblick auf wenigstens ein Plausibilisierungs- und/oder Verifizierungskriterium zu plausibilisieren und/oder zu verifizieren.
13. System nach einem der vorhergehenden Aspekte, wobei die Datenverarbeitungseinrichtung (3) eingerichtet ist, entsprechende Abfragekriterien auf Grundlage von, insbesondere über das Internet (6), zugänglichen Informationen zu einem jeweiligen Nutzer (4) zu erzeugen.
14. System nach einem der vorhergehenden Aspekte, wobei die Datenverarbeitungseinrichtung (3) eingerichtet ist, entsprechende Attributsdatensätze auf Grundlage von, insbesondere über das Internet (6), zugänglichen Informationen zu einem jeweiligen Nutzer (4) zu aktualisieren.
15. System nach einem der vorhergehenden Aspekte, wobei die Datenverarbeitungseinrichtung (3) eingerichtet ist, einem Nutzer (4), etwa über eine Internet-Webseite oder ein Internet-Portal, eine Zugangsmöglichkeit zu einem ihm zugeordneten Attributsdatensatz zu schaffen, sodass der Nutzer (4) einen ihm zugeordneten Attributsdatensatz, selbstständig ändern, d. h. insbesondere Freigabeeinstellungen zu bestimmten Attributen und/oder Freigabeberechtigungen zu bestimmten Anfragern (2), ändern kann.
16. System nach einem der vorhergehenden Aspekte, wobei die Datenverarbeitungseinrichtung (3) eingerichtet ist, Abfragekriterien nutzerdialogartig implementiert nach einer vordefinierten Abfragereihenfolge bzw. -logik geordnet abzufragen.
17. System nach Aspekt 16, wobei die Datenverarbeitungseinrichtung (3) eingerichtet ist, Abfragekriterien nutzerdialogartig implementiert, gegebenenfalls über eine virtuelle Dialogassistenzanwendung, über einen Audio- und/oder Videodialog abzufragen.
18. System nach einem der vorhergehenden Aspekte, wobei ein Abfragekriterium wenigstens eine Attributskategorie aus der folgenden Gruppe an Attributskategorien betrifft:
   persönliche Daten eines Nutzers, wie z. B. Name, Geschlecht, Alter, Biometrie, Größe einzelner oder mehrerer Körperteile, Gewicht, Gesundheit, Herkunft, Ausbildung, Arbeitsverhältnis, berufliche und/oder soziale Stellung, Einkommen, Arbeits- und/oder Wohnort, politische Orientierung, religiöse Orientierung, sexuelle Orientierung, berufliche und/oder freizeitliche geistige Aktivität, berufliche und/oder freizeitliche körperliche Aktivität, Freizeitverhalten, Essverhalten, Trinkverhalten, Sozialverhalten, Work-Life-Balance, und/oder
   - vertragliche Vereinbarungen eines Nutzers mit Bereitstellern von Dienstleistungen und/oder Waren, wie z. B. bestehende Kommunikationsverträge, Leasingverträge, Versicherungsverträge, Mediennutzungsverträge, Behandlungsverträge.
19. Verfahren zur nutzerseitig autorisierbaren Verarbeitung und Freigabe von nutzerattributbezogenen Daten an einen Anfrager (2), umfassend die Schritte:
   - Erzeugen und/oder Bereitstellen von, insbesondere nutzerdialogartig implementierten, Abfragekriterien zu bestimmten Attributen einer oder mehrerer Attributskategorien eines Nutzers über eine Kommunikationsschnittstelle (3.3);
   - Erzeugen, auf Grundlage wenigstens einer über die Kommunikationsschnittstelle (3.3) getätigten nutzerseitigen Angabe zu wenigstens einem Attribut, wenigstens eines die wenigstens eine nutzerseitige Angabe beinhaltenden Attributsdatensatzes, und
   - Speichern des wenigstens einen Attributsdatensatzes in einer der Datenverarbeitungseinrichtung (3) zugeordneten, insbesondere Cloud-basierten, Datenspeichereinrichtung (3.2);
   - Autorisieren einer über eine Kommunikationsschnittstelle (3.4) erfolgenden Anfrage eines Anfragers an die Datenspeichereinrichtung (3.2) nach bestimmten Attributsdatensätzen, insbesondere nach bestimmten Attributen wenigstens eines Nutzers (4), auf Grundlage des Vorliegens wenigstens eines Autorisierungskriteriums; und - Ermitteln von einer Anfrage des Anfragers entsprechenden Attributsdatensätzen bei Vorliegen des wenigstens einen Autorisierungskriteriums.

## Patentansprüche

1. System (1) zur nutzerseitig autorisierbaren Verarbeitung und Freigabe von nutzerattributbezogenen Daten an einen Anfrager (2), **gekennzeichnet durch**:
- eine Datenverarbeitungseinrichtung (3), welche
zur Erzeugung und/oder Bereitstellung von, insbesondere nutzerdialogartig implementierten, Abfragekriterien zu bestimmten Attributen einer oder mehrerer Attributskategorien eines Nutzers (4) über eine erste Kommunikationsschnittstelle (3.3), insbesondere an ein nutzerseitiges Endgerät (4.1), und
auf Grundlage wenigstens einer über die erste Kommunikationsschnittstelle (3.3) getätigten nutzerseitigen Angabe zu wenigstens einem abfragekriteriumsbezogenen Attribut zur Erzeugung wenigstens eines die wenigstens eine nutzerseitige Angabe beinhaltenden nutzerbezogenen Attributsdatensatzes und zur Speicherung des wenigstens einen nutzerbezogenen Attributsdatensatzes in einer der Datenverarbeitungseinrichtung (3) zugeordneten, insbesondere Cloud-basierten, Datenspeichereinrichtung (3.2) eingerichtet ist,
- eine Autorisierungseinrichtung (5), welche zur Autorisierung einer über eine zweite Kommunikationsschnittstelle (3.4) erfolgenden Anfrage eines Anfragers (2) an die Datenspeichereinrichtung (3.2) nach bestimmten Attributsdatensätzen, insbesondere nach bestimmten Attributen wenigstens eines Nutzers (4), auf Grundlage des Vorliegens wenigstens eines Autorisierungskriteriums eingerichtet ist, wobei die Datenverarbeitungseinrichtung (3) bei Vorliegen des wenigstens einen Autorisierungskriteriums zur Ermittlung wenigstens eines einer Anfrage des Anfragers (2) entsprechenden Attributsdatensatzes eingerichtet ist.

2. System nach Anspruch 1, wobei die Datenverarbeitungseinrichtung (3) bei Vorliegen des wenigstens einen Autorisierungskriteriums zur Ausgabe von einer Anfrage des Anfragers (2) entsprechenden Attributsdatensätzen an ein Endgerät (2.1) des Anfragers (2) über die zweite Kommunikationsschnittstelle (3.4) eingerichtet ist.

3. System nach Anspruch 2, wobei die Datenverarbeitungseinrichtung (3) bei Vorliegen des wenigstens einen Autorisierungskriteriums zur Ausgabe von einer Anfrage des Anfragers (2) entsprechenden Attributsdatensätzen an ein Endgerät (2.1) des Anfragers (2) über die zweite Kommunikationsschnittstelle (3.4) eingerichtet ist, wobei die Attributsdatensätze zunächst anonymisiert ausgegeben sind.

4. System nach einem der vorhergehenden Ansprüche, wobei das Autorisierungskriterium ein Vorliegen eines anfragerseitig erfolgten, insbesondere an den Betreiber der Datenverarbeitungseinrichtung (3) gerichteten, Bezahlereignisses für die Anfragemöglichkeit nach bestimmten in der Datenspeichereinrichtung (3.2) gespeicherten Attributsdatensätzen beschreibt.

5. System nach einem der vorhergehenden Ansprüche, wobei die Datenverarbeitungseinrichtung (3) eingerichtet ist, eine über die zweite Kommunikationsschnittstelle (3.4) anfragerseitig erhaltene Auswahl wenigstens eines an den Anfrager ausgegebenen Attributsdatensatzes zu verarbeiten.

6. System nach Anspruch 5, wobei die Datenverarbeitungseinrichtung (3) eingerichtet ist, basierend auf einer über die zweite Kommunikationsschnittstelle (3.4) anfragerseitig erhaltenen Auswahl wenigstens eines an den Anfrager (2) ausgegebenen Attributsdatensatzes über die erste Kommunikationsschnittstelle (3.3) eine Freigabeberechtigungsanfrage, ob der jeweilige Nutzer (4) eine Freigabe von wenigstens einem Attribut aus seinem Attributsdatensatz über die zweite Kommunikationsschnittstelle (3.4) an den Anfrager (2) berechtigt, an ein Endgerät (4.1) des einem anfragerseitig ausgewählten Attributsdatensatzes zugehörigen Nutzers (4) zu erzeugen und zu übertragen.

7. System nach Anspruch 6, wobei die Datenverarbeitungseinrichtung (3) eingerichtet ist, über die zweite Kommunikationsschnittstelle (3.4) ein nutzerseitig freigegebenes Attribut an ein Endgerät (2.1) des Anfragers (2) zu übertragen.

8. System nach Anspruch 7, wobei Datenverarbeitungseinrichtung (3) eingerichtet ist, das nutzerseitig freigegebene Attribut an das Endgerät (2.1) des Anfragers (2) nur bei Vorliegen eines Freigabekriteriums zu übertragen.

9. System nach Anspruch 8, wobei das Freigabekriterium ein ein Vorliegen eines anfragerseitig erfolgten, insbesondere an den Nutzer (4) gerichteten, Bezahlereignisses für die Übertragung des nutzerseitig berechtigt freigegebenen Attributs an das Endgerät (2.1) des Anfragers (2) beschreibt.

10. System nach einem der vorhergehenden Ansprüche, wobei die erste und/oder zweite Kommunikationsschnittstelle (3.3, 3.4) eingerichtet ist, Daten verschlüsselt zu versenden und/oder zu empfangen und die Datenverarbeitungseinrichtung (3) eingerichtet ist, Daten, d. h. insbesondere nutzerseitige Angabe zu wenigstens einem Attribut, über Prinzipien kryptografisch verketteter einzelner blockartiger Datensätze zu verschlüsseln.

11. System nach einem der vorhergehenden Ansprüche, wobei die Datenverarbeitungseinrichtung (3) eingerichtet ist, die in jeweiligen Attributsdatensätzen enthaltenen Attribute, insbesondere automatisiert, im Hinblick auf wenigstens ein Plausibilisierungs- und/oder Verifizierungskriterium zu plausibilisieren und/oder zu verifizieren.

12. System nach einem der vorhergehenden Ansprüche, wobei die Datenverarbeitungseinrichtung (3) eingerichtet ist, entsprechende Abfragekriterien auf Grundlage von, insbesondere über das Internet (6), zugänglichen Informationen zu einem jeweiligen Nutzer (4) zu erzeugen; und/oder die Datenverarbeitungseinrichtung (3) eingerichtet ist, entsprechende Attributsdatensätze auf Grundlage von, insbesondere über das Internet (6), zugänglichen Informationen zu einem jeweiligen Nutzer (4) zu aktualisieren..

13. System nach einem der vorhergehenden Ansprüche, wobei die Datenverarbeitungseinrichtung (3) eingerichtet ist, einem Nutzer (4), etwa über eine Internet-Webseite oder ein Internet-Portal, eine Zugangsmöglichkeit zu einem ihm zugeordneten Attributsdatensatz zu schaffen, sodass der Nutzer (4) einen ihm zugeordneten Attributsdatensatz, selbstständig ändern, d. h. insbesondere Freigabeeinstellungen zu bestimmten Attributen und/oder Freigabeberechtigungen zu bestimmten Anfragern (2), ändern kann.

14. System nach einem der vorhergehenden Ansprüche, wobei die Datenverarbeitungseinrichtung (3) eingerichtet ist, Abfragekriterien nutzerdialogartig implementiert nach einer vordefinierten Abfragereihenfolge bzw. -logik geordnet abzufragen, wobei die Datenverarbeitungseinrichtung (3) eingerichtet ist, Abfragekriterien nutzerdialogartig implementiert, gegebenenfalls über eine virtuelle Dialogassistenzanwendung, über einen Audio- und/oder Videodialog abzufragen.

15. System nach einem der vorhergehenden Ansprüche, wobei ein Abfragekriterium wenigstens eine Attributskategorie aus der folgenden Gruppe an Attributskategorien betrifft:
persönliche Daten eines Nutzers, wie z. B. Name, Geschlecht, Alter, Biometrie, Größe einzelner oder mehrerer Körperteile, Gewicht, Gesundheit, Herkunft, Ausbildung, Arbeitsverhältnis, berufliche und/oder soziale Stellung, Einkommen, Arbeits- und/oder Wohnort, politische Orientierung, religiöse Orientierung, sexuelle Orientierung, berufliche und/oder freizeitliche geistige Aktivität, berufliche und/oder freizeitliche körperliche Aktivität, Freizeitverhalten, Essverhalten, Trinkverhalten, Sozialverhalten, Work-Life-Balance, und/oder
- vertragliche Vereinbarungen eines Nutzers mit Bereitstellern von Dienstleistungen und/oder Waren, wie z. B. bestehende Kommunikationsverträge, Leasingverträge, Versicherungsverträge, Mediennutzungsverträge, Behandlungsverträge.
